# EUROPÄISCHE PATENTSCHRIFT

(11) **EP 0 679 691 B1**
(45) Veröffentlichungstag und Bekanntmachung des Hinweises auf die Patenterteilung: **05.09.2001**
(21) Anmeldenummer: 95810252.7
(22) Anmeldetag: 13.04.1995
(51) Int. Cl.: C09B 29/00, C09B 44/04, C09B 44/20

(54) **Kationische oder basische Aminobenzthiazol-Farbstoffe**
Cationic or basic aminobenzthiazole dyestuffs
Colorants cationiques ou basiques du type aminobenzthiazole

(30) Priorität: 26.04.1994 CH 128594
(43) Veröffentlichungstag der Anmeldung: 02.11.1995
(73) Patentinhaber: Ciba Specialty Chemicals Holding Inc., 4057 Basel (CH)
(72) Erfinder: Käser, Adolf, Dr., 4103 Bottmingen (CH)

(56) Entgegenhaltungen:
- DE-A- 1 619 415
- DE-A- 2 224 788
- DE-A- 2 232 542
- FR-A- 1 214 233
- FR-A- 2 257 653
- US-A- 2 889 315
- US-A- 3 132 132
- US-A- 4 382 801

## Beschreibung

Die vorliegende Erfindung betrifft neue kationische oder basische, von Sulfonsäuregruppen freie nicht-reaktive Azofarbstoffe, Verfahren zu deren Herstellung sowie deren Verwendung zum Färben von Textilmaterialien und insbesondere von Papier.

Die neuen nicht-reaktiven Azofarbstoffe entsprechen der Formel 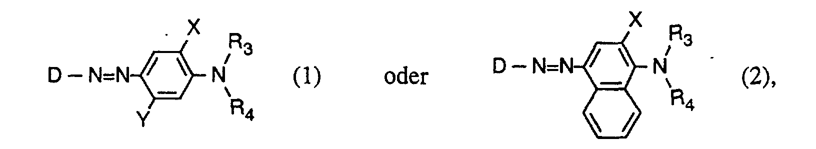 worin
- D: ein Rest einer Diazokomponenten der Formel 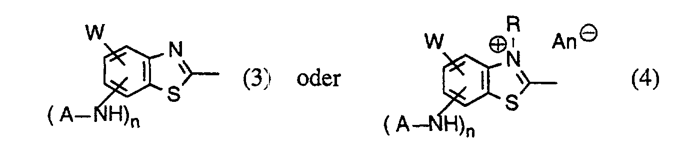 ist, wobei
A einen einen Triazin-, Pyrazin-, Pyrimidin- oder Chinoxalinrest bedeutet, der ein oder mehrere Halogenatome aufweist, welche durch Reaktion mit einem eine OH-, SH- oder NH-Gruppe enthaltenden Rest ersetzt sein können,
W Wasserstoff, Halogen, Alkyl, Alkoxy, Carboxy, Alkanoylamino, Arylamino, Arylcarbonylamino oder Arylureido,
R gegebenenfalls substituiertes Alkyl,
An^{⊖} ein farbloses Anion und
n 0 oder 1 bedeutet,
- X: Wasserstoff, Alkyl oder Alkoxy,
- Y: Wasserstoff, Alkyl, Alkoxy, Alkanoylamino, Arylcarbonylamino oder Arylureido,
- R₃: Wasserstoff oder gegebenenfalls substituiertes Alkyl,
- R₄: Wasserstoff, gegebenenfalls substituiertes Alkyl, Cycloalkyl oder Aryl oder
- R₃ und R₄: zusammen mit dem sie verbindenden N-Atom einen gegebenenfalls substituierten 5-, 6-, oder 7-Ring bilden, der weitere Heteroatome enthalten kann, wobei n nur dann 0 sein kann, wenn R₃ und R₄ zusammen mit dem sie verbindenden N-Atom einen Ring bilden, der als Substituenten einen aromatischen carbocyclischen oder heterocyclischen Ring enthält.

Der Ausdruck "nicht-reaktive" Farbstoffe, bedeutet, dass diese Farbstoffe unter Färbebedingungen nicht mit dem Textilmaterial oder Papier unter Ausbildung einer chemischen Bindung reagieren.

Unter Alkylresten sind erfindungsgemäss generell geradkettige, verzweigte oder cyclische Alkylgruppen zu verstehen. Cycloalkyl weist vorzugsweise 5 bis 8 C-Atome, offenkettiges Alkyl vorzugsweise 1 bis 8, insbesondere 1 bis 4 C-Atome auf.

Als unverzweigtes oder verzweigtes offenkettiges Alkyl kommen z.B. in Frage: Methyl, Ethyl, n- und iso-Propyl, n-, sec.- oder teit.Butyl, n- und iso-Pentyl, n- und iso-Hexyl oder 2-Ethylhexyl.

Diese Alkylreste können ein- oder mehrmals substituiert sein, beispielsweise durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann. Ausserdem können die Alkylreste durch kationische Reste substituiert sein, wie z.B. Trialkylammonium- oder Pyridiniumreste. In Frage kommen z.B. Trimethylammonium, Triethylammonium, Trihydroxyethylammonium, Pyridinium oder 3-Alkylpyridinium.

Geeignete Reste dieser Art sind z.B.: Hydroxyethyl, 2-Hydroxypropyl-1, 1-Hydroxy-isopropyl, 2-Hydroxy-isopropyl, 2,3-Dihydroxypropyl-1, Methoxyethyl, Ethoxymethyl, Methoxycarbonyloxyethyl, Chlorethyl, Cyanethyl, Benzyl, 1-Phenylethyl, 2-Phenylethyl, Dimethylaminoethyl, Diethylaminoethyl, Hydroxyethylaminoethyl, Dihydroxyethylaminoethyl, Methoxycarbonylethyl oder Aminocarbonylethyl.

Geeignete durch kationische Gruppen substituierte Alkylreste sind z.B. Trimethylammoniumethyl, Triethylammoniumethyl, Trihydroxyethylammoniumethyl, Trihydroxyethylammoniumpropyl, Pyridiniumethyl, 4-Methylpyridiniumethyl, 2-Hydroxy-trimethylammoniumpropyl, Trimethylammoniummethylcarbonylaminoethyl, Dimethyl-2-hydroxypropylammoniumethyl, Dimethyl-2-cyanethylammoniumethyl, Dimethyl-2-chlorethylammoniumethyl, Dimethyl-2-methoxyethylammoniumethyl, Methyl-dihydroxyethylammoniumethyl, Methyl-di-2-hydroxyproylammoniumethyl N-methylmorpholiniumethyl und N-methylpiperidiniumethyl.

Bei Cycloalkyl handelt es sich vor allem um Cyclopentyl und Cyclohexyl; als Substituent kommen vor allem C₁-C₄-Alkyl, insbesondere CH₃, in Frage.

Geeignete Alkoxyreste sind vorzugsweise solche mit 1 bis 4 C-Atomen, z.B. Methoxy, Ethoxy, Propoxy, iso-Propoxy, n-Butoxy, iso-Butoxy oder tert.-Butoxy. Diese Alkoxyreste können substutiert sein, z.B. durch die als Substituenten der Alkylgruppen aufgeführten Reste, insbesondere durch Hydroxy oder C₁-C₄-Alkoxy. Als substituierte Alkoxyreste kommen z.B. Hydroxyethoxy, Methoxyethoxy, 2-Hydroxypropoxy, 1,2-Dihydroxypropoxy-3 oder 1,2-Dimethoxypropoxy-3 in Frage.

Unter Halogen ist Fluor, Brom Jod oder vor allem Chlor zu verstehen.

Unter Arylresten sind in dieser Anmeldung generell aromatische oder heteroaromatische Reste, insbesondere jedoch Naphthyl- oder vor allem Phenylreste zu verstehen. Alle diese Reste können unsubstituiert oder substituiert sein. Als Substituenten kommen z.B. C₁-C₄-Alkyl, C₁-C₄-Alkoxy, Brom, Chlor, Nitro, Cyan, Carboxy oder C₁-C₄-Alkylcarbonylamino in Betracht. Die besonders bevorzugte Bedeutung von Aryl ist jedoch Phenyl.

Bei den Resten D der Formel (3) oder (4) bedeutet A vorzugsweise einen Rest der Formel 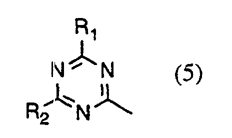 worin R₁ und R₂ unabhängig voneinander je Hydroxy, Alkoxy, Alkylthio, Amino, Alkylamino, Dialkylamino, Arylamino, Piperidino oder Morpholino bedeuten.

Geeignete Reste R₁ und R₂ sind vor allem Amino, C₁-C₄-Alkylamino, Di-C₁-C₄-Alkylamino, Phenylamino oder Morpholino, wobei die Alkylgruppen wie oben erläutert substituiert sein können. Besonders geeignete Reste R₁ und R₂ sind Methylamino, Ethylamino, Hydroxyethylamino, Dihydroxyethylamino, Hydroxypropylamino, Hydroxyisopropylamino, Methoxyethylamino, Methoxypropylamino, Hydroxyethoxyethylamino, Methoxyethoxyethylamino, Dimethylaminoethylamino, Dimethylaminopropylamino, Diethylaminoethylamino, Diethylaminopropylamino, Aminoethylamino, 2-Aminopropylamino, 4-Aminoethylpiperazino, 4-Hydroxyethylpiperazino, Phenylamino oder Morpholino.

Vorzugsweise haben R₁ und R₂ die gleiche Bedeutung, vor allem je Hydroxyetylamino oder Dihydroxyethylamino.

In den erfindungsgemässen Farbstoffen bedeutet W in den Diazokomponenten der Formeln (3) oder (4) vorzugsweise Chlor, Brom, C₁-C₄-Alkyl, C₁-C₄-Alkoxy, Acetylamino, Benzoylamino oder Phenylureido.

Besonders wertvolle erfindungsgemässe Farbstoffe entsprechen der Formel (1) und unter diesen sind diejenigen, bei denen D einen kationischen Rest der Formel (4) bedeutet, insbesondere bevorzugt.

Als Anion An^{⊖} kommen bei den Resten der Formel (4) sowohl anorganische wie organische Anionen in Frage; beispielsweise sind genannt: Halogenid-, wie Chlorid-, Bromid- oder Jodid-, Sulfat-, Methylsulfat-, Bortetrafluorid-, Aminosulfonat-, Perchlorat-, Carbonat-, Bicarbonat-, Phosphat-, Phosphormolybdat-, Phosphorwolframat-, Phosphorwolframmolybdat-, Benzolsulfonat-, Naphthalinsulfonat-, 4-Chlorbenzolsulfonat-, Oxalat-, Maleinat-, Acetat-, Propionat-, Lactat-, Succinat-, Chloracetat-, Tartrat-, Methansulfonat- oder Benzoationen, oder komplexe Anionen, wie das von Chlorzinkdoppelsalzen.

Das Anion ist im allgemeinen durch das Herstellungsverfahren vorgegeben. Vorzugsweise liegen die Chloride, Hydrogensulfate, Sulfate, Methosulfate, Phosphate, Formiate, Lactate oder Acetate vor. Die Anionen können in bekannter Weise gegen andere Anionen ausgetauscht werden.

Falls die erfindungsgemässen Farbstoffe weitere kationische Gruppen tragen, so enthalten sie als zusätzliche Anionen vorzugsweise ebenfalls die vorstehend aufgeführten Anionen.

R bedeutet vor allem unsubstituiertes C₁-C₄-Alkyl oder C₁-C₄-Alkyl, das durch Hydroxy, Phenyl oder Aminocarbonylethyl substituiert ist.

Die bevorzugte Bedeutung von X ist Wasserstoff, C₁-C₄-Alkyl oder C₁-C₄-Alkoxy, vor allem Wasserstoff.

Y bedeutet vor allem Wasserstoff, C₁-C₄-Alkyl, C₁-C₄-Alkoxy oder C₁-C₄-Alkylcarbonylamino. Besonders bevorzugte Bedeutungen von Y sind Wasserstoff, Methyl, Methoxy und Acetylamino.

R₃ und R₄ bedeuten vorzugsweise unabhängig voneinander je unsubstituiertes C₁-C₄-Alkyl oder C₁-C₄-Alkyl, das durch Hydroxy, Chlor, Cyan, C₁-C₄-Alkoxy, C₁-C₄-Alkoxycarbonyl, C₁-C₄-Alkylcarbonyloxy, Carbonamido, Phenyl, Amino, Monoalkylamino, Dialkyamino oder Trialkylammonium substituiert ist, wobei in den Alkylaminogruppen die Alkylreste ebenfalls durch die genannten Substituenten substituiert sein können.

Falls R₃ und R₄ zusammen mit dem sie verbindenden N-Atom einen 5-, 6- oder 7-Ring bedeuten, so handelt es sich vor allem um einen Pyrrolidin-, Piperidin-, Morpholin- oder Piperazinring. Der Piperazinrest kann am nicht mit der Kupplungskomponente verbundenen N-Atom substituiert sein, z.B. durch Alkyl, Arylcarbonyl, Arylaminocarbonyl, Benzthiazolyl, Benzthioazolylaryl oder vor allem durch einen aromatischen carbocyclischen oder heterocyclischen Rest. Besonders bevorzugt bilden R₃ und R₄ einen Piperazinrest der Formel 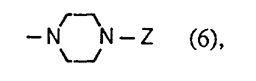 worin
- Z: einen Rest A gemäss der Definition unter den Formeln (3) und (4) oder einen gegebenenfalls substituierten Arylrest bedeutet.

In besonders bevorzugten erfindungsgemässen Farbstoffen bedeutet Z einen Rest der Formel 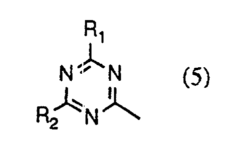 worin R₁ und R₂ unabhängig voneinander je Hydroxy, Alkoxy, Alkylthio, Amino, Alkylamino, Dialkylamino, Arylamino, Piperidino oder Morpholino bedeuten, oder einen Phenyl-oder Naphthylrest, der unsubstituiert oder durch C₁-C₄-Alkyl oder durch 1,3-Benzthiazolyl-2 substituiert ist, oder Phenylcarbonyl, Phenylaminocarbonyl oder 1,3-Benzthiazolyl-2.

Besonders bevorzugte erfindungsgemässe Farbstoffe entsprechen den Formeln 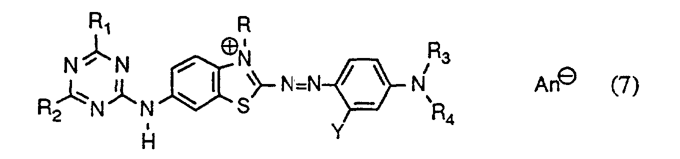 oder 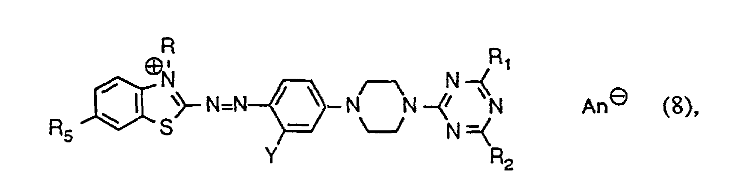 worin
R₁ und R₂ unabhängig voneinander je Hydroxy, Alkoxy, Alkylthio, Amino, Alkylamino, Dialkylamino, Arylamino, Piperidino oder Morpholino,
R unsubstituiertes C₁-C₄-Alkyl oder C₁-C₄-Alkyl, das durch Hydroxy, Phenyl oder Aminocarbonylethyl substituiert ist,
Y Wasserstoff, C₁-C₄-Alkyl, C₁-C₄-Alkoxy oder C₁-C₄-Alkylcarbonylamino,
R₃ und R₄ unabhängig voneinander je unsubstituiertes C₁-C₄-Alkyl oder C₁-C₄-Alkyl, das durch Hydroxy, Chlor, Cyan, C₁-C₄-Alkoxy, C₁-C₄-Alkoxycarbonyl,
C₁-C₄-Alkylcarbonyloxy, Carbonamido, Phenyl, Amino, Monoalkylamino, Dialkyamino oder Trialkylammonium substituiert ist, wobei in den Alkylaminogruppen die Alkylreste ebenfalls durch die genannten Substituenten substituiert sein können,
R₅ Wasserstoff, C₁-C₄-Alkyl, C₁-C₄-Alkoxy, C₁-C₄-Alkylcarbonylamino, Phenylcarbonylamino oder Phenylureido und
An^{⊖} ein farbloses Anion bedeuten.

Die erfindungsgemässen Farbstoffe der Formeln (1) und (2) werden auf an sich bekannte Weise hergestellt, beispielsweise indem man ein Amin der Formel 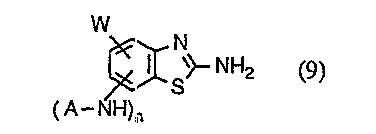 diazotiert, die erhaltene Diazoverbindung mit einer Kupplungskomponente der Formel 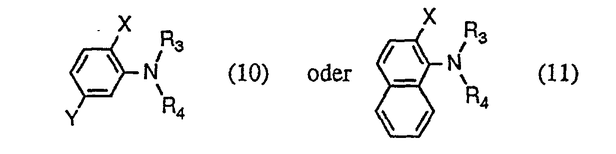 kuppelt und gegebenenfalls den erhaltenen Azofarbstoff auf bekannte Weise mit einem Quaternierungsmittel R-An quaterniert, wobei X, Y, R₃, R₄, W, A, n und R die unter den Formeln (1) bis (4) angegebenen Bedeutungen aufweisen und An einen bei der Quaternierung in das Anion An^{⊖} überführbaren Rest bedeutet.

Die Diazotierung der Verbindungen der Formel (9) erfolgt in an sich bekannter Weise, etwa mit Natriumnitrit in saurem, z.B. schwefelsaurem, wässrigem Medium. Die Diazotierung kann aber auch mit anderen Diazotierungsmitteln, z.B. mit Nitrosylschwefelsäure ausgeführt werden. Dabei kann eine zusätzliche Säure im Reaktionsmedium anwesend sein, z.B. Phosphorsäure, Schwefelsäure, Ameisensäure, Essigsäure, Salzsäure oder Mischungen dieser Säuren, z.B. Mischungen aus Phosphorsäure und Essigsäure. Zweckmässig wird die Diazotierung bei Temperaturen von -10 bis 30°C, z.B. von -10°C bis Raumtemperatur, durchgeführt.

Die Kupplung der diazotierten Verbindung der Formel (9) auf die Kupplungskomponente der Formel (10) oder (11) erfolgt ebenfalls in bekannter Weise, beispielsweise in saurem, wässrigem oder wässrig-organischem Medium, vorteilhaft bei Temperaturen von -10 bis 30°C, insbesondere unter 10°C. Als Säuren verwendet man z.B. Salzsäure, Essigsäure, Schwefelsäure oder Phosphorsäure. Diazotierung und Kupplung können beispielsweise im Eintopfverfahren, also im gleichen Reaktionsmedium, durchgeführt werden.

Die Quaternierung erfolgt zweckmässig in einem indifferenten organischen Lösungsmittel, beispielsweise in einem Kohlenwasserstoff, Chlorkohlenwasserstoff oder Nitrokohlenwasserstoff, wie Benzol, Toluol, Xylol, Tetrachlorethan, Chloroform, Tetrachlorkohlenstoff, Mono- oder Dichlorbenzol oder Nitrobenzol, in einem Säureamid oder Säureanhydrid, wie Dimethylformamid, N-Methylacetamid oder Essigsäureanhydrid, in Dimethylsulfoxid oder in einem Keton, wie Aceton oder Methylethylketon. Anstelle eines organischen Lösungsmittels kann auch ein Überschuss des Alkylierungsmittels verwendet werden. Es kann aber auch in wässrigem Medium gearbeitet werden, z.B. in wässriger Suspension, oder etwa in Eisessig. Die Quaternierung wird vorteilhaft bei erhöhter Temperatur durchgeführt, z.B. zwischen ca. 50 und 130°C beim Arbeiten in organischem Lösungsmittel oder in reinem Dimethylsulfat oder zwischen ca. 20 und 60°C beim Arbeiten in wässriger Phase. Die Quaternierung wird gegebenenfalls unter Zusatz von säurebindenden Mitteln, wie einer anorganischen Base, z.B. NaOH oder KOH, Natriumacetat, Magnesiumoxid, Magnesiumcarbonat, Soda, Calciumcarbonat oder Natriumbicarbonat und gegebenenfalls unter Druck, vorgenommen. Die jeweils günstigsten Bedingungen lassen sich durch einen Vorversuch leicht ermitteln.

Es werden zur Quaternierung bekannte Quaternierungsmittel R-An eingesetzt, die den Rest R einführen und deren Rest An in das Anion An^{⊖} übergeführt wird. Einige Beispiele für Quaternierungsmittel R-An sind: Alkylhalogenide, Alkylester der Schwefelsäure oder Alkylester organischer Sulfonsäuren, beispielsweise Methylchlorid, -bromid oder -jodid, Ethylchlorid, -bromid oder -jodid, Propylbromid oder -jodid, Butylbromid, Dimethylsulfat, Diethylsulfat, Dibutylsulfat, Benzolsulfonsäuremethylester, Methansulfonsäuremethyl-, p-Toluolsulfonsäuremethyl-, -ethyl-, -propyl- oder -butylester, n- und iso-Propyl- und n-, sec.- und tert.-Butylester der Benzolsulfonsäure, Acrylsäureester, Acrylsäureamid, Benzylchlorid oder 1-Chlor-buten-(2).

Die bevorzugten erfindungsgemässen Farbstoffe der Formel 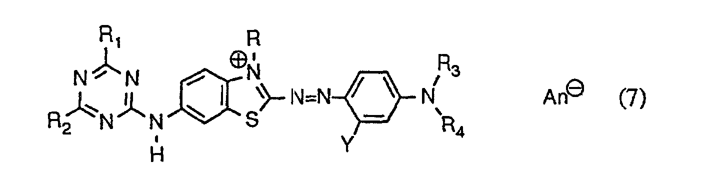 erhält man beispielsweise, indem man ein Amin der Formel 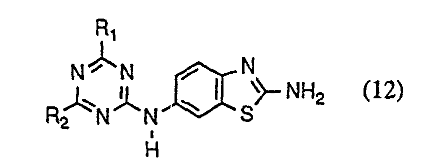 diazotiert, die erhaltene Diazoverbindung mit einer Kupplungskomponente der Formel 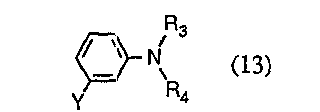 zu einer Verbindung der Formel 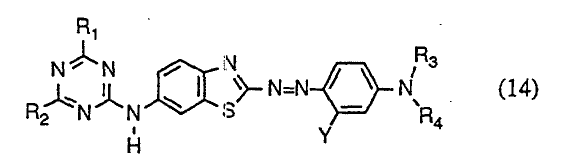 kuppelt und den erhaltenen Azofarbstoff auf bekannte Weise mit einem Quaternierungsmittel R-An quaterniert, wobei X, Y, R₃, R₄, W, A, n, R und An die unter den Formeln (1) bis (4) angegebenen Bedeutungen aufweisen.

Die ausserdem bevorzugten erfindungsgemässen Farbstoffe der Formel 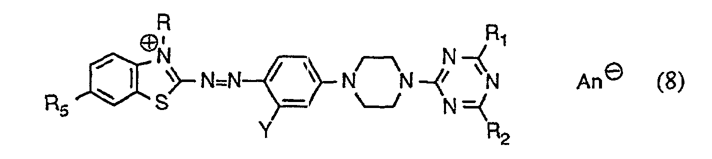 erhält man beispielsweise, indem man ein Amin der Formel 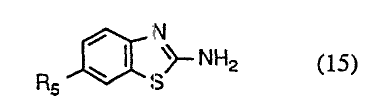 diazotiert, die erhaltene Diazoverbindung mit einer Kupplungskomponente der Formel 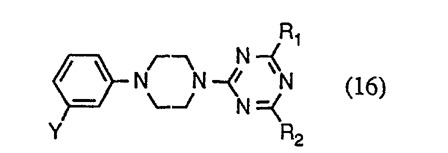 zu einer Verbindung der Formel 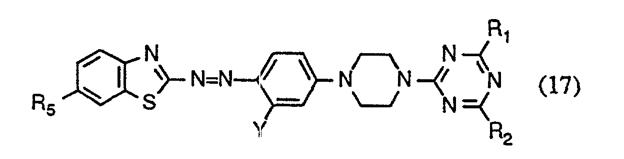 kuppelt und den erhaltenen Azofarbstoff auf bekannte Weise mit einem Quaternierungsmittel R-An quaterniert, wobei R₅, Y, R₁, R₂, R und An die unter den Formeln (1) bis (4) angegebenen Bedeutungen aufweisen.

Die Verbindungen der Formeln (9), (10), (11), (12), (13), (15) und (16) sind bekannt oder können auf an sich bekannte Art hergestellt werden.

Die erfindungsgemässen Farbstoffe der Formel (1) und (2) eignen sich insbesondere zum Färben von Papier, da sie eine hohe Substantivität auf dieses Substrat aufweisen. Man erhält Färbungen in blauen oder violetten Farbtönen, die sich durch gute Echtheiten auszeichnen. Farbstoffe mit kationischen Ladungen sind ausserdem besonders geeignet zum Färben von holzhaltigem Papier (Holzschliff). Die Abwässer sind in den meisten Fällen völlig farblos.

Die Farbstoffe der Formel (1) und (2) können als feste oder flüssige Handelsform formuliert und zum Färben von Papier eingesetzt werden.

Als Pulver oder Granulat werden die Farbstoffe insbesondere bei der diskontinuierlichen Massefärbung verwendet, wobei der Farbstoff chargenweise im Pulper, Holländer oder in der Mischbütte zugesetzt wird. Dabei werden die Farbstoffe vorzugsweise als Farbstoffzubereitungen verwendet, die Coupagemittel, z.B. Harnstoff als Lösungsvermittler, Dextrine, Glaubersalz, Kochsalz sowie Dispergatoren, Entstäubungsmittel und Sequestriermittel, wie Tetranatriumpyrophosphat, enthalten können.

Ein weiterer Gegenstand der Erfindung sind somit feste Farbstoffzubereitungen zum Färben von Papier, welche Farbstoffe der Formel (1) oder (2) enthalten.

In den letzten Jahren hat die Verwendung von konzentrierten wässrigen Lösungen von Farbstoffen an Bedeutung gewonnen, und zwar wegen der Vorteile, die solche Lösungen gegenüber Farbstoffen in Pulverform besitzen. Durch die Verwendung von Lösungen werden die mit der Staubbildung verbundenen Schwierigkeiten vermieden und die Verbraucher von der zeitraubenden und oftmals schwierigen Auflösung des Farbstoffpulvers in Wasser befreit. Die Verwendung von konzentrierten Lösungen wurde ausserdem durch die Entwicklung von kontinuierlichen Färbeverfahren für Papier angeregt, da es bei diesen Verfahren zweckmässig ist, die Lösung direkt in den Holländer zu geben oder an irgendeinem anderen geeigneten Punkt der Papierherstellung zuzufügen.

Ein weiterer Gegenstand der Erfindung sind daher konzentrierte wässrige Lösungen von Farbstoffen der Formel (1) oder (2), welche dadurch gekennzeichnet sind, dass sie mindestens 5, beispielsweise 8 bis 30 Gewichtsprozent Farbstoff, bezogen auf das Gesamtgewicht der Lösung, enthalten.

Konzentrierte wässrige Lösungen von Farbstoffen der Formel (1) oder (2) können z.B. hergestellt werden, indem man die bei der Herstellung des Farbstoffes anfallende Farbstoffsuspension filtriert, gegebenenfalls entsalzt, z.B. durch ein Membrantrennverfahren und durch Zusatz von Hilfsmitteln, wie Harnstoff, ∈-Caprolactam oder Polyethylenglykol stabilisiert Man kann aber auch den isolierten Farbstoff in Salzsäure anschlämmen, erneut filtrieren und den Filterkuchen mit Lithiumhydroxid oder einem geeigneten Amin, z.B. einem Alkanolamin, und der nötigen Menge Wasser vermischen. Schliesslich kann man auch die Kupplung in Gegenwart von Lithiumhydroxid, Ammoniak oder Alkanolamin durchführen und die Syntheselösung anschliessend entsalzen. Derartige Farbstofflösungen eignen sich zum Färben einer Papierpulpe in Anwesenheit von Kollophonium und Alaunschlichte.

Die so hergestellten Farbstofflösungen enthalten vorzugsweise auf 100 Teile Farbstoff 400 bis 900 Teile Wasser, 0 bis 200 Teile weitere Zusätze wie Harnstoff, ∈-Caprolactam oder Polyethylenglykol sowie 0 bis 400 Teile einer organischen Carbonsäure, z.B. Ameisensäure, Essigsäure, Propionsäure oder Milchsäure.

Die erfindungsgemässen wässrigen Konzentrate, die bei Lagerungstemperaturen bis zu -5°C stabil sind, eignen sich zum Färben von Papier, auf welchem sie mit oder ohne Verwendung einer Schlichte attraktive blaue oder violette Farbtöne ergeben.

Die Farbstoffe der Formel (1) und (2) können ausserdem auch zum Färben von Textilmaterialien aus Cellulose, z.B. Baumwolle, sowie zum Färben von Leder und Glasfasern eingesetzt werden.

Kationische Benzthiazol-Azofarbstoff sind bereits in den Dokumenten US-A-2 889 315, DE-A-22 32 542, US-A-3 132 132, US-A-4 382 801, FR-A-1 214 233, DE-A-16 19 415, DE-A-22 24 788 und FR-A-2 257 653 beschrieben. Diese enthalten jedoch keine Reste A wie die Farbstoffe gemäss vorliegender Erfindung oder im Rest R₄ keinen heterocyclischen Substituenten.

In den nachfolgenden Beispielen beziehen sich Teile und Prozente auf das Gewicht und die Temperaturen sind in Celsiusgraden angegeben.

Beispiel 1: 18,4 Teile Cyanurchlorid werden in 300 Teilen Eiswasser mit 12,2 Teilen Ethanolamin versetzt. Dann wird innert 1 Stunde auf 45°C erwärmt und bei dieser Temperatur gerührt, bis die Reaktion beendet ist. Der pH-Wert wird durch Zugabe von 2N Natronlauge bei ca. 6 gehalten.

Die resultierende Suspension wird mit 15,7 Teilen 2,6-Diaminobenzthiazol versetzt und während 1 Stunde auf 75°C erwärmt. Der pH-Wert sinkt dabei auf 4 bis 5. Das teilweise ausgefallene Produkt der Formel 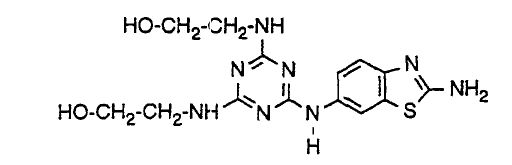 wird durch Zugabe von Kochsalz vollständig ausgefällt und abgenutscht.

Zu einer Lösung von 18,1 Teilen dieses Amins in 120 Teilen 60 %iger Schwefelsäure werden bei -10°C innert 30 Minuten 17,3 Teile 40 %ige Nitrosylschwefelsäure zugetropft. Dann wird 1 Stunde bei -10 bis -5°C und anschliessend 2 Stunden bei -5 bis 0°C bis zur vollständigen Diazotierung gerührt. Die erhaltene Diazolösung wird innerhalb von 15 Minuten bei 0 bis 8°C zu einer Lösung von 9,8 Teilen
N-Ethyl-N-hydroxyethyl-1,3-toluidin in 90 Teilen Eiswasser und 8 Teilen 100 %iger Schwefelsäure zugetropft und der pH-Wert wird danach innert 1 Stunde durch Zugabe von 50 %iger Natronlauge auf ca. 2 angehoben. Die Temperatur wird durch Zugabe von ca. 130 Teilen Eis bei 8 bis 10°C gehalten. Nach beendeter Kupplung wird der pH-Wert mit Natronlauge auf 5 bis 6 gestellt und der schmierig ausgefallene Farbstoff durch Zugabe von Methanol und Verrühren bei 30 bis 40°C zur Kristallisation gebracht. Der Niederschlag wird dann abgenutscht, mit 500 Teilen heissem Wasser gewaschen und getrocknet. Man erhält 24 Teile Azobase der folgenden Formel

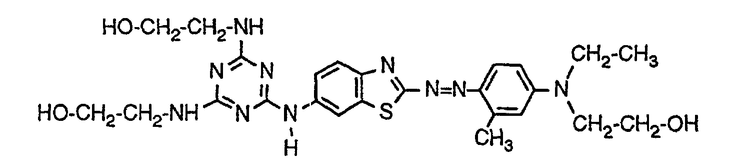

Zu einer Anschlämmung aus 11 Teilen dieser Azobase, 50 Teilen Eisessig und 0,9 Teilen Magnesiumoxid werden bei 40°C innen: 30 Minuten 2,7 Teile Dimethylsulfat zugetropft. Die Suspension wird während 3 Stunden verrührt, bis die Quaternierung beendet ist. Nach Zugabe von 5 Teilen Wasser wird noch 1 Stunde bei 60°C gerührt und anschliessend das Lösungsmittel abdestilliert. Der Rückstand wird in 100 Teilen Wasser aufgenommen und der Farbstoff durch Zugabe von 20 Teilen Kochsalz ausgefällt. Nach Filtration und Trocknung erhält man 11,5 Teile Farbstoff der folgenden Formel

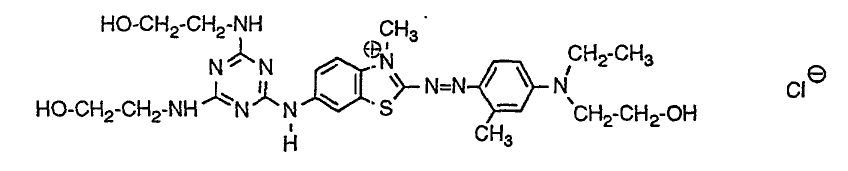

Der Farbstoff färbt Papier in brillanten Blautönen von ausgezeichneter Nassechtheit. Die Färbeabwässer sind farblos.

Beispiele 2 - 41: Auf analoge Art wie im Beispiel 1 beschrieben werden die folgenden Farbstoffe hergestellt. Sie färben Papier in blauen Farbtönen mit guten Echtheiten.

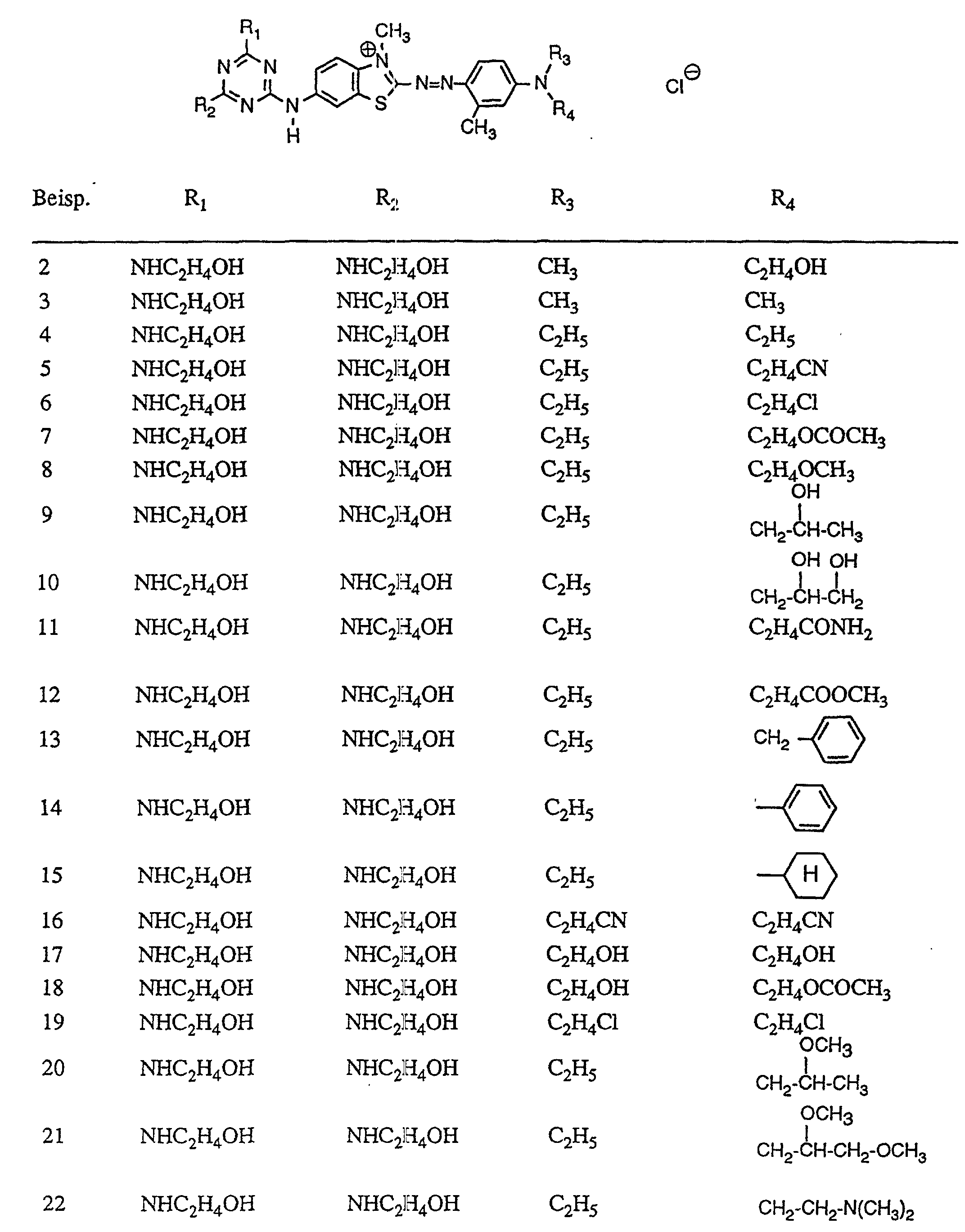

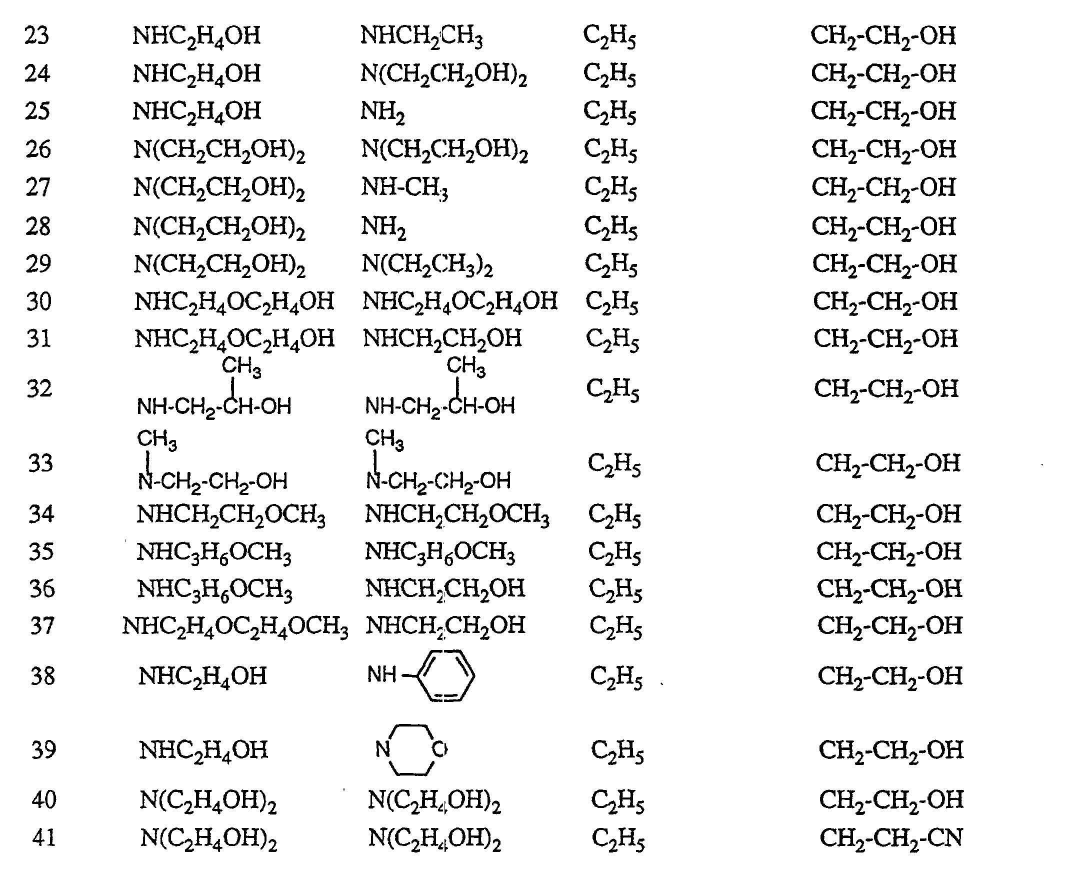

Beispiele 42 und 43: Auf analoge Art wie im Beispiel 1 beschrieben werden die folgenden Farbstoffe hergestellt. Sie färben Papier in blauen Farbtönen mit guten Echtheiten.

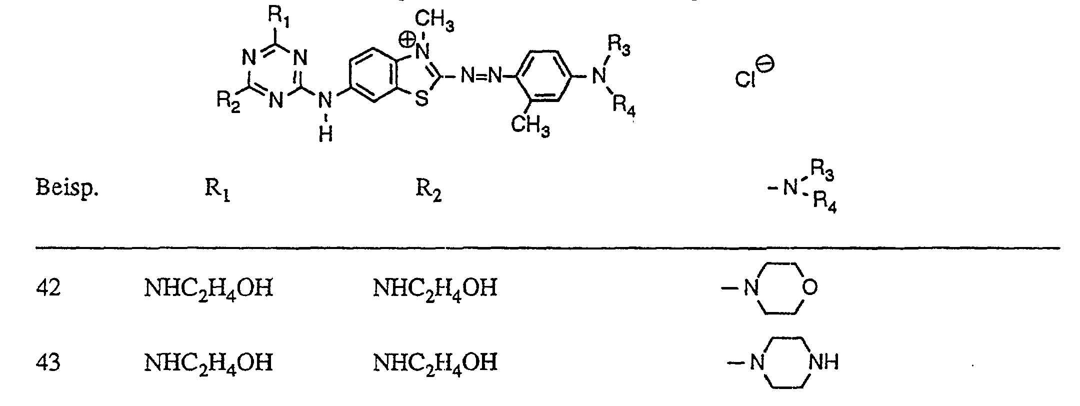

Beispiele 44 - 46: Auf analoge Art wie im Beispiel 1 beschrieben werden die folgenden Farbstoffe hergestellt. Sie färben Papier in blauen Farbtönen mit guten Echtheiten.

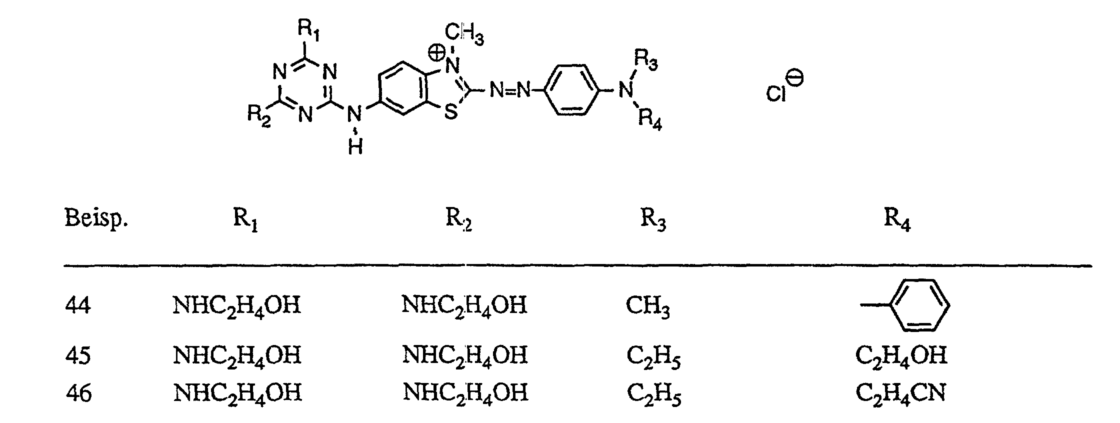

Beispiele 47 - 52: Auf analoge Art wie im Beispiel 1 beschrieben werden die folgenden Farbstoffe hergestellt. Sie färben Papier in blauen Farbtönen mit guten Echtheiten.

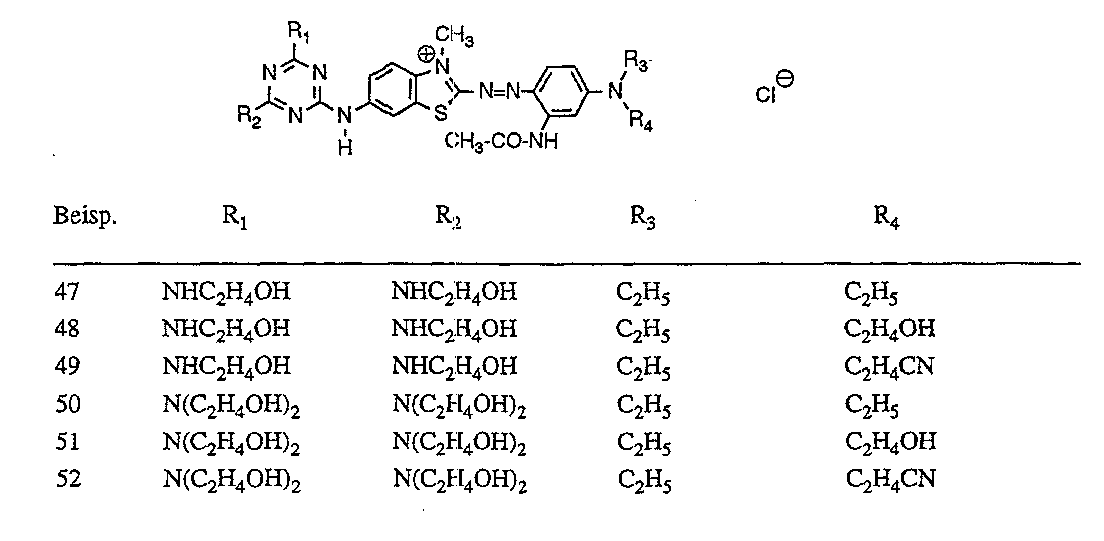

Beispiele 53 - 58: Auf analoge Art wie im Beispiel 1 beschrieben werden die folgenden Farbstoffe hergestellt. Sie färben Papier in blauen Farbtönen mit guten Echtheiten.

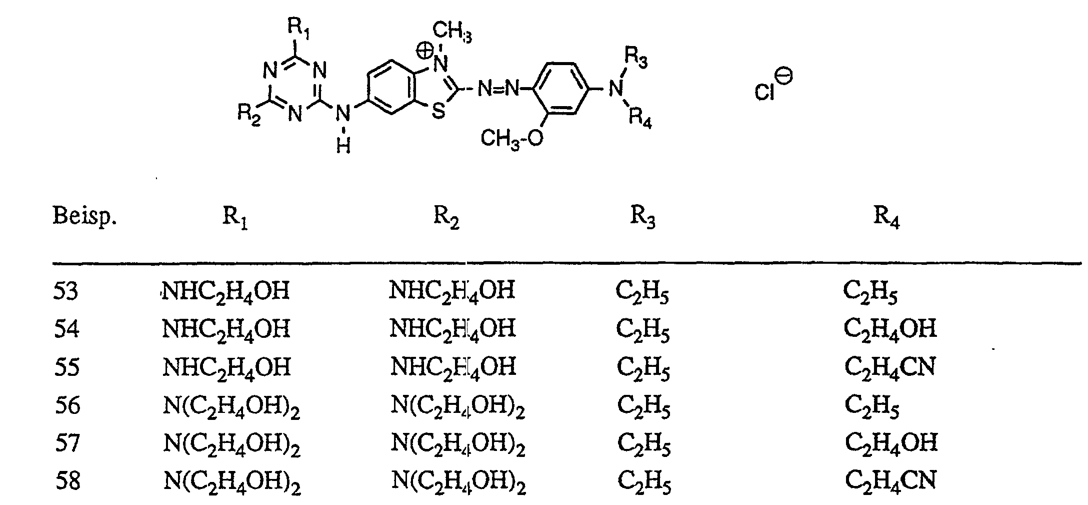

Beispiele 59 - 64: Auf analoge Art wie im Beispiel 1 beschrieben werden die folgenden Farbstoffe hergestellt. Sie färben Papier in blauen Farbtönen mit guten Echtheiten.

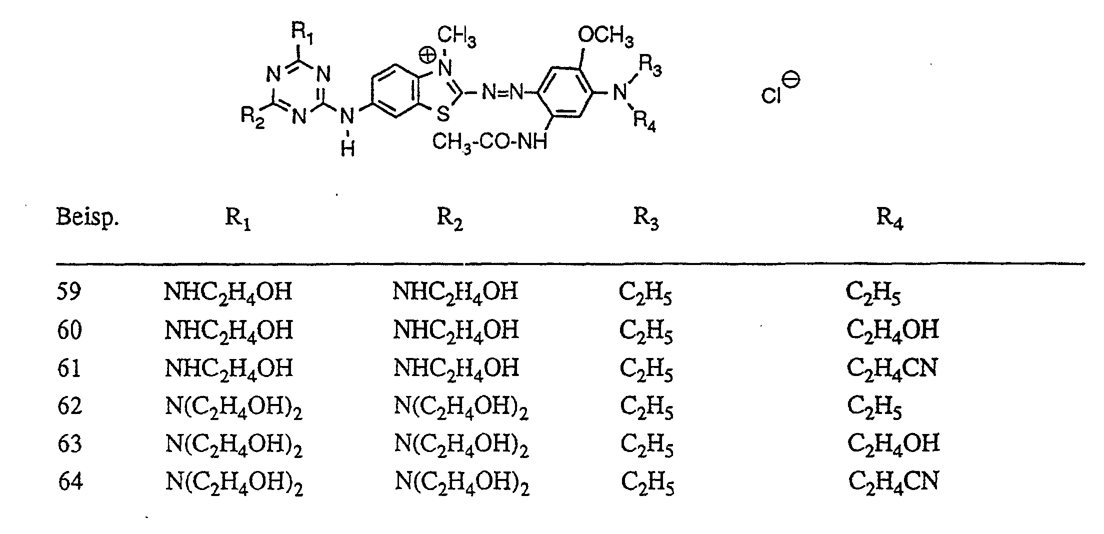

Beispiele 65 - 67: Auf analoge Art wie im Beispiel 1 beschrieben werden die folgenden Farbstoffe hergestellt. Sie färben Papier in blauen Farbtönen mit guten Echtheiten.

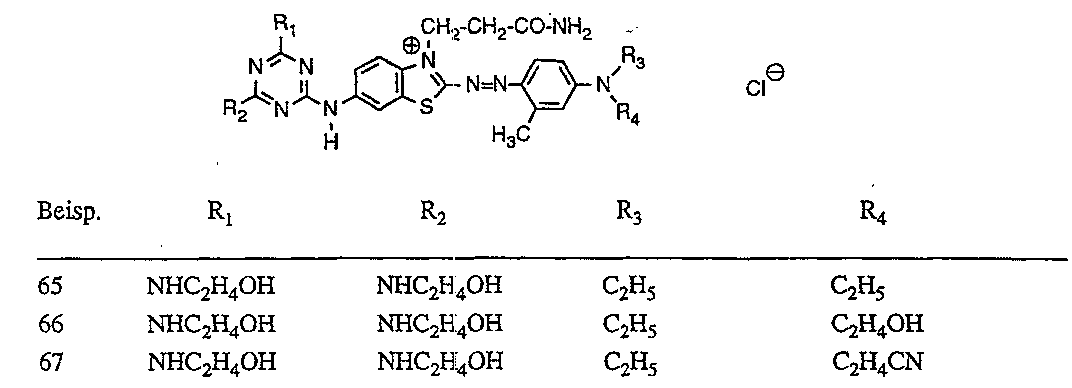

Beispiele 68 - 73: Auf analoge Art wie im Beispiel 1 beschrieben, werden die folgenden Farbstoffe hergestellt. Sie färben Papier in blauen Farbtönen mit guten Echtheiten.

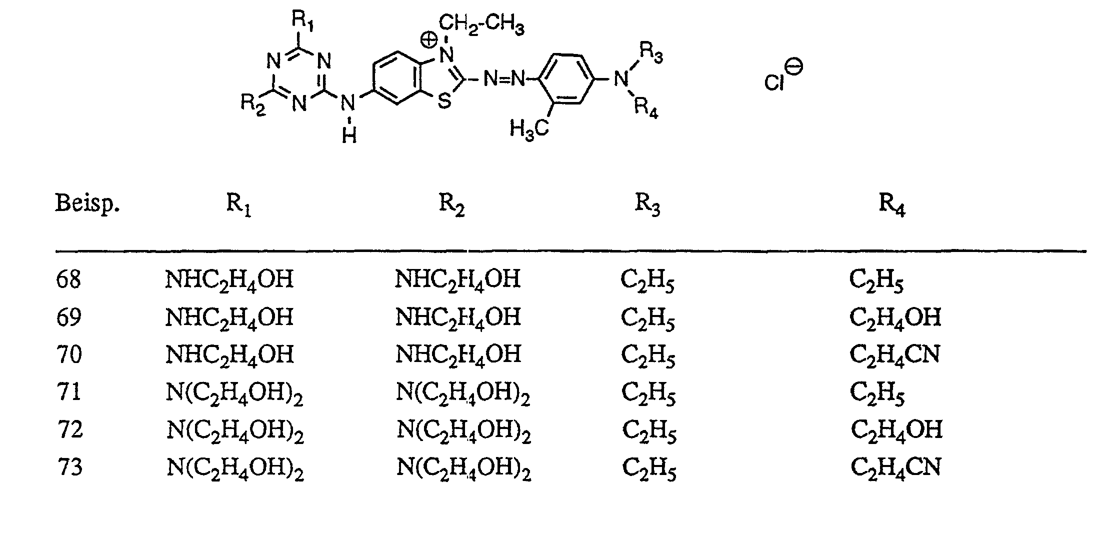

Beispiele 74 - 79: Auf analoge Art wie im Beispiel 1 beschrieben werden die folgenden Farbstoffe hergestellt. Sie färben Papier in blauen Farbtönen mit guten Echtheiten.

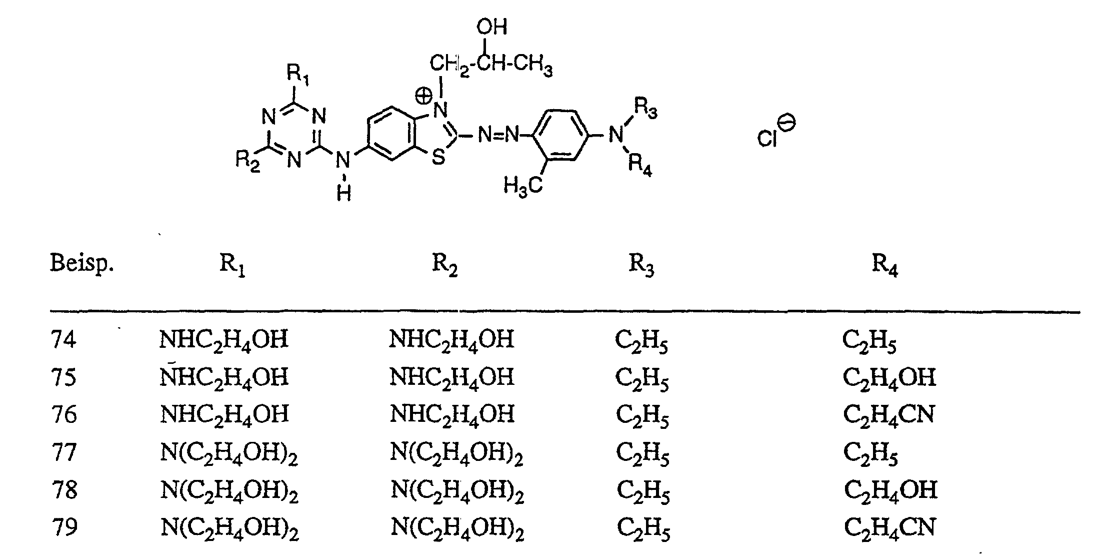

Beispiele 80 - 96: Auf analoge Art wie im Beispiel 1 beschrieben werden die folgenden Farbstoffe hergestellt. Sie färben Papier in blauen Farbtönen mit guten Echtheiten. Besonders geeignet sind sie zum Färben von holzhaltigem Papier. Falls in der nachfolgenden Tabelle Substituenten mit kationischer Ladung angegeben sind, so enthalten die Farbstoffe zusätzlich die entsprechende Anzahl Anionen.

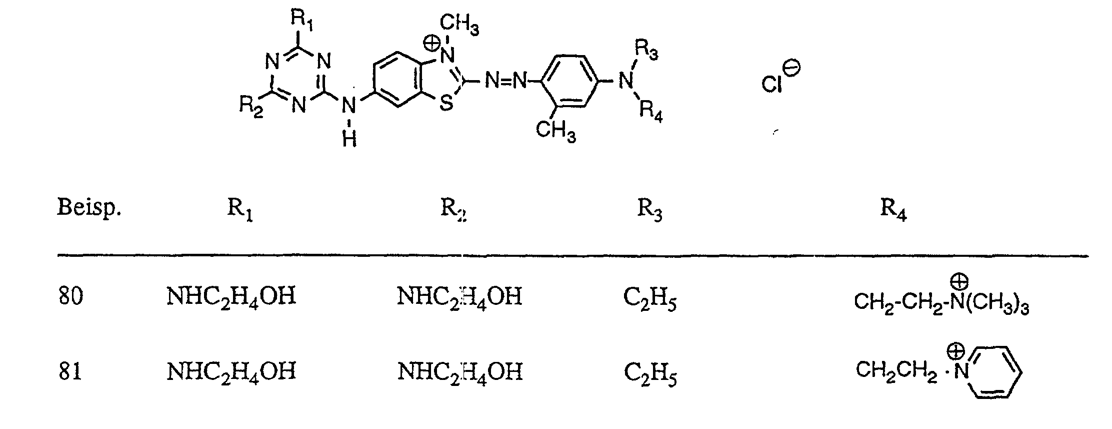

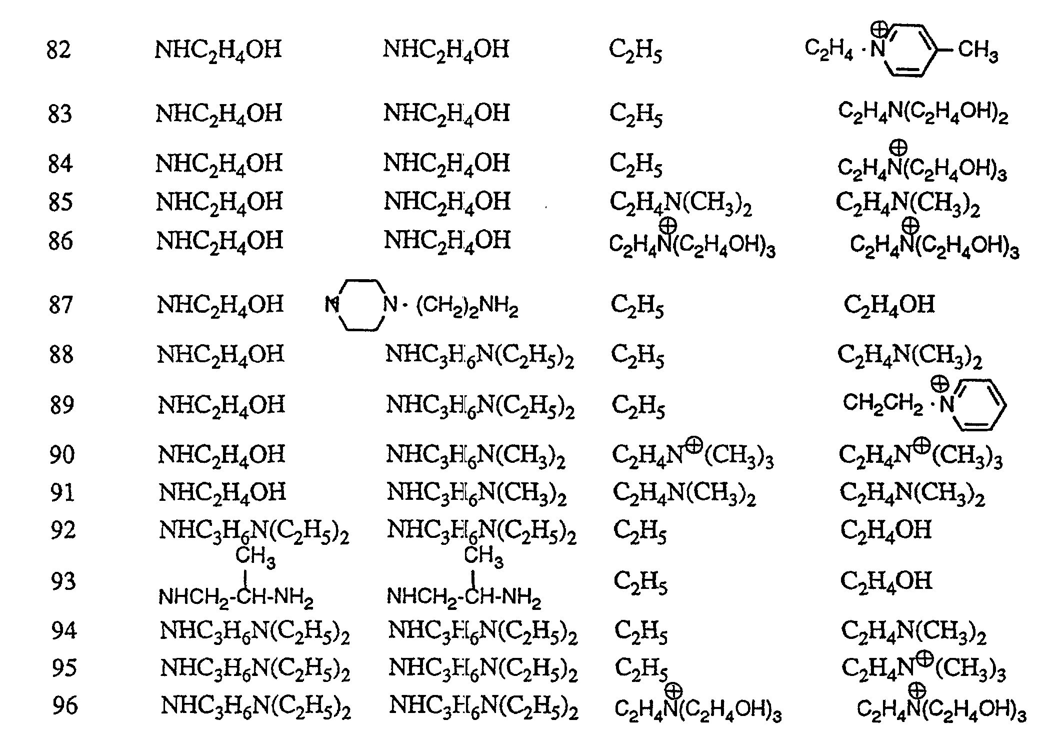

Beispiele 97 bis 101: Auf analoge Art wie im Beispiel 1 beschrieben werden die folgenden Farbstoffe hergestellt, indem man anstelle von 2,6-Diaminobenzthiazol eine äquivalente Menge 2,6-Diamino-chlorbenzthiazol bzw. 2,6-Diamino-brombenzthiazol verwendet. Die Farbstoffe färben Papier in blauen Farbtönen mit guten Echtheiten.

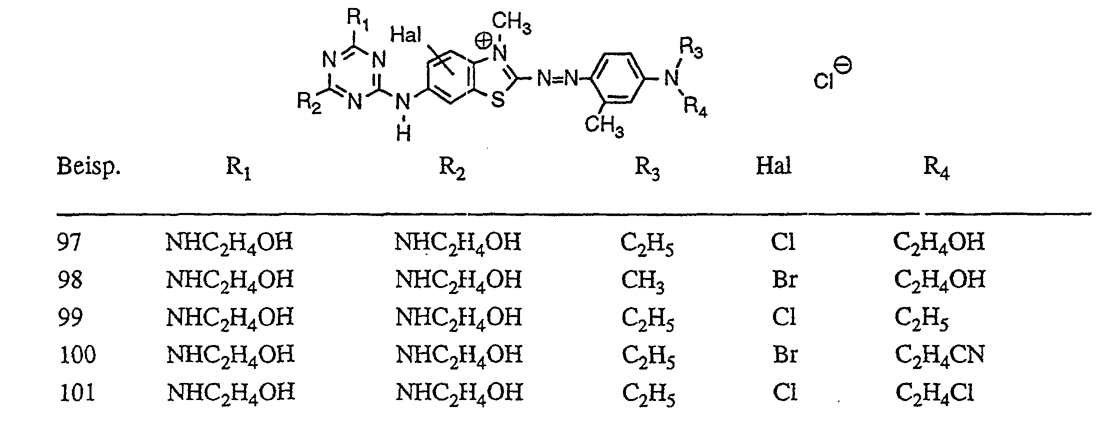

Beispiel 102: 18,4 Teile Cyanurchlorid werden in 300 Teilen Eiswasser mit 21 Teilen Diethanolamin versetzt. Dann wird innert 1 Stunde auf 45°C erwärmt und bei dieser Temperatur gerührt, bis die Reaktion beendet ist. Der pH-Wert wird durch Zugabe von 2N Natronlauge bei 6 bis 7 gehalten.

Die resultierende Suspension wird mit 16,7 Teilen 1-(3-Methylphenyl)piperazin versetzt, auf 80 bis 85°C erwärmt und gerührt, bis die Kondensation beendet ist. Der pH-Wert wird durch Zugabe von 2N Natronlauge bei 8,5 bis 9 gehalten. Es scheidet sich ein Öl ab, welches bei langsamem Abkühlen unter intensivem Rühren kristallisiert und abgenutscht werden kann. Es werden 41 Teile der Verbindung der folgenden Formel erhalten:

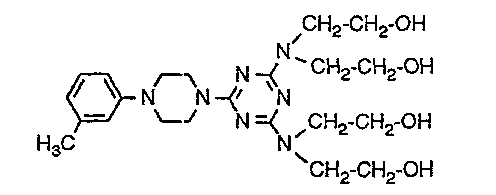

Man arbeitet in analoger Weise wie im Beispiel 1 beschrieben, indem man 6-Methoxy-2-aminobenzthiazol diazotiert und auf eine äquivalente Menge der obigen Verbindung kuppelt und anschliessend mit Dimethylsulfat quaterniert. Man erhält den Farbstoff der Formel

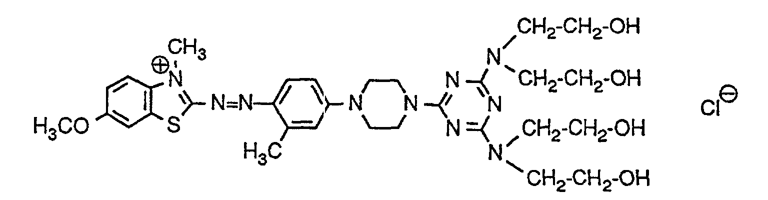

Er färbt Papier in Papier in brillanten Blautönen von ausgezeichneter Nassechtheit und zieht vollständig auf Papier auf.

Beispiele 103 bis 134: Auf analoge Art wie im Beispiel 102 beschrieben werden die folgenden Farbstoffe hergestellt. Sie färben Papier in blauen Farbtönen mit guten Echtheiten.

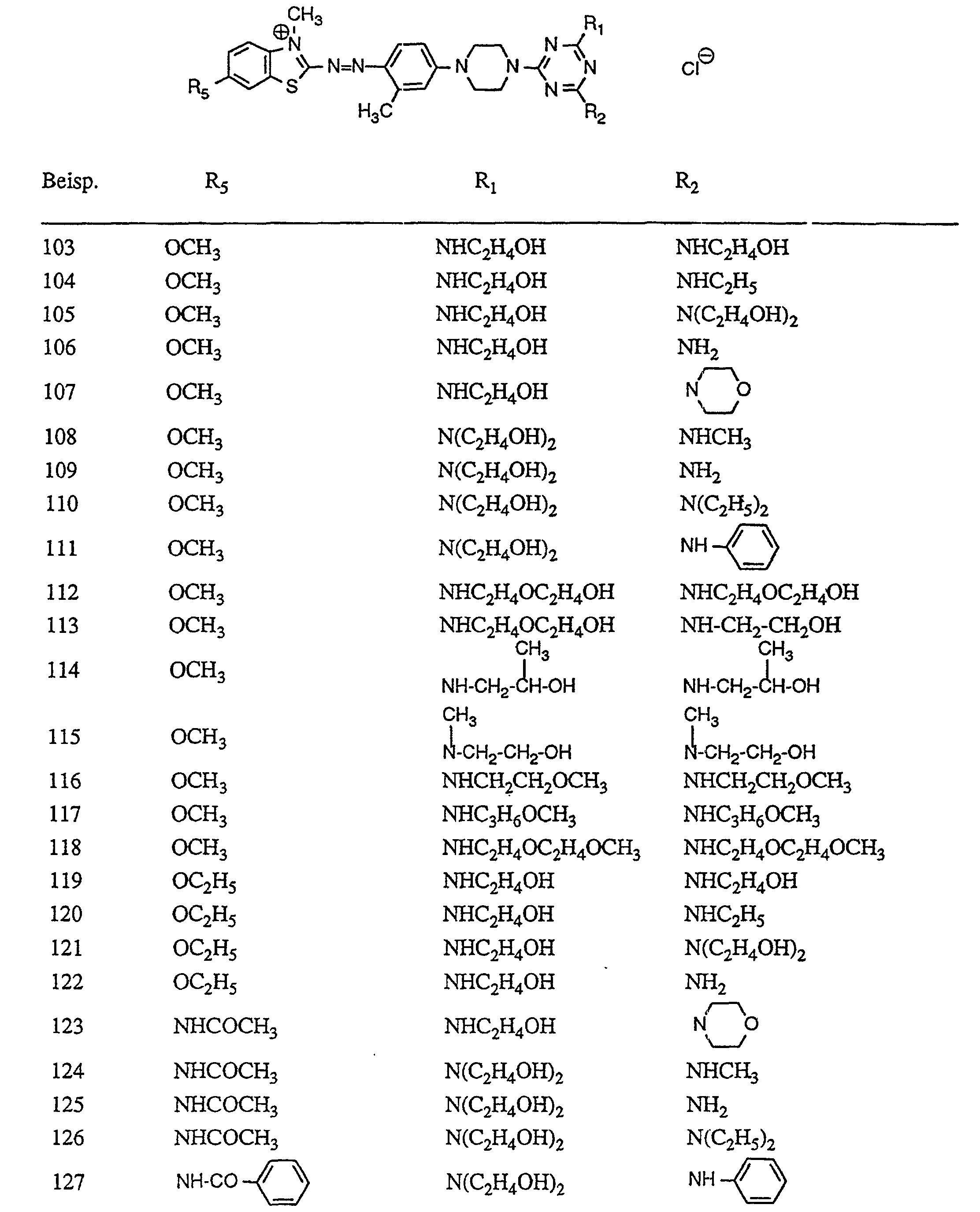

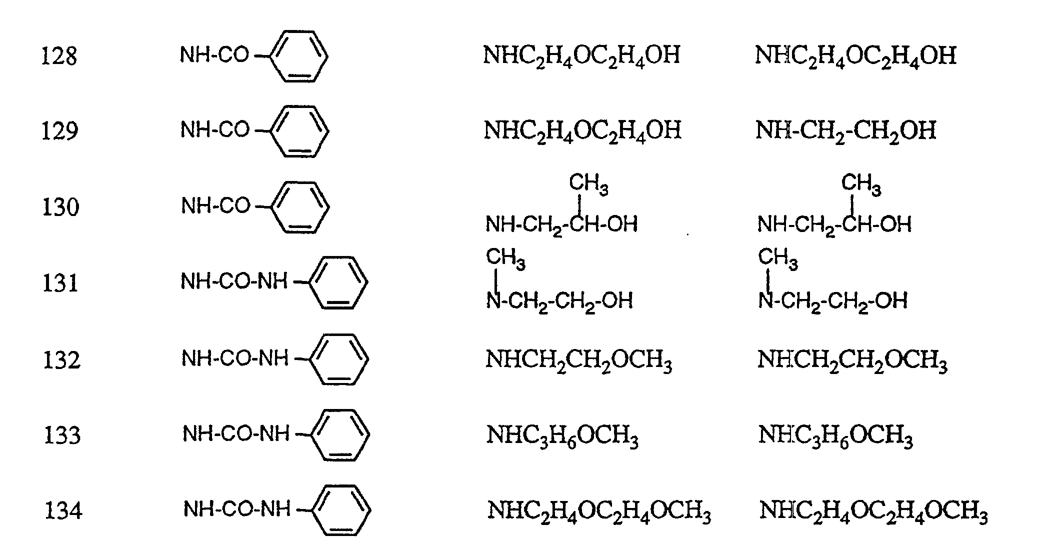

Beispiele 135 bis 140: Auf analoge Art wie im Beispiel 102 beschrieben werden die folgenden Farbstoffe hergestellt, indem man anstelle von 6-Methoxy-2-aminobenzthiazol eine äquivalente Menge der analogen 2-Amino-chlorbenzthiazole bzw. 2-Amino-brombenzthiazole verwendet. Die Farbstoffe färben Papier in blauen Farbtönen mit guten Echtheiten.

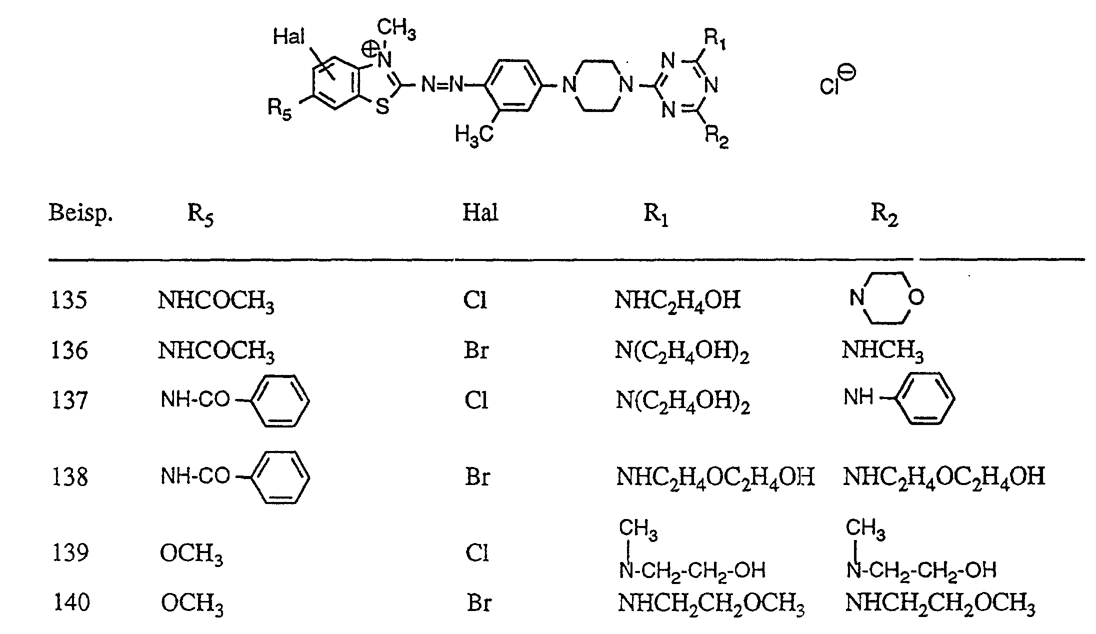

Beispiele 141 bis 152: Arbeitet man wie im Beispiel 1 beschrieben, beendet jedoch die Synthese nach Herstellung der Azobase, führt also keine Quaternierung durch, so lassen sich die folgenden Farbstoffe herstellen, die Papier in violetten brillanten Farbtönen mit guter Lichtechtheit und guten Nassechtheiten färben und auf Papier vollständig aufziehen.

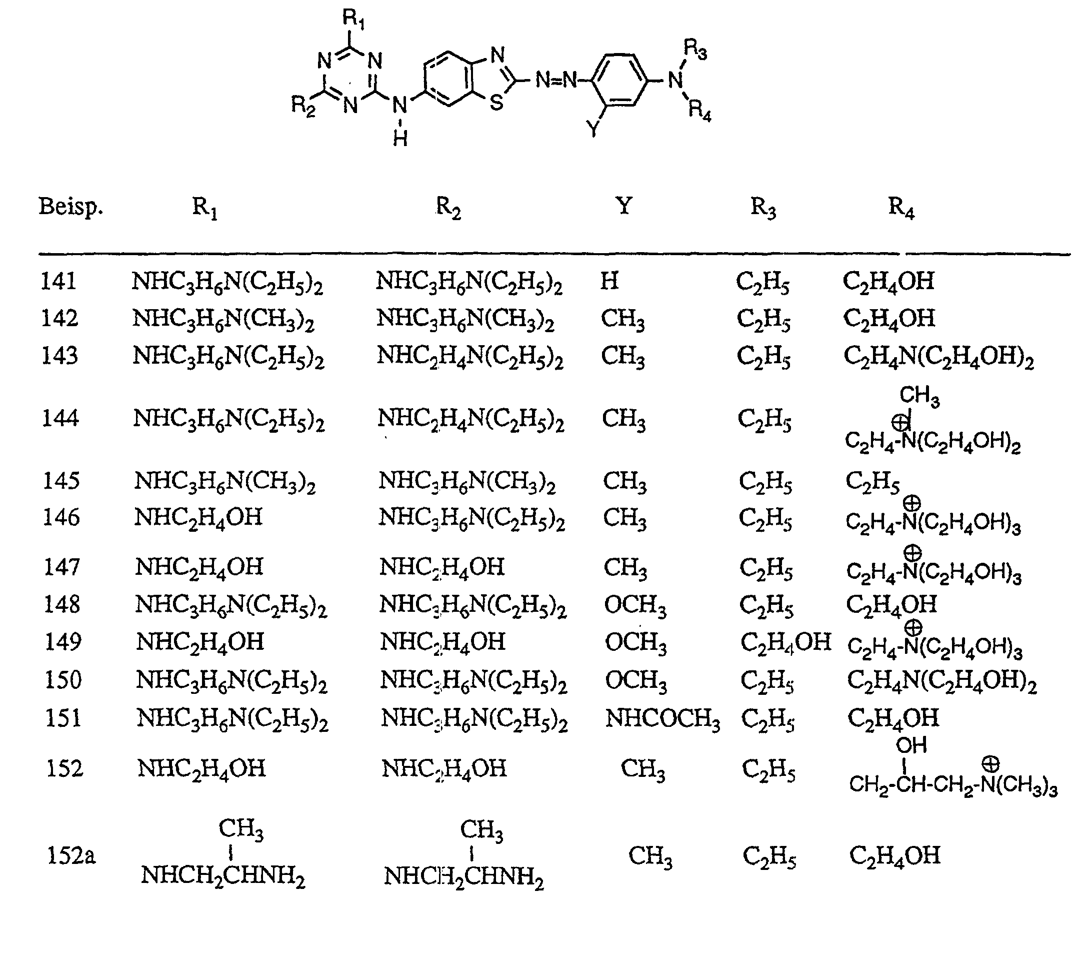

Beispiel 153: Nach der Arbeitsweise der Beispiele 141 bis 152 wird auch der Farbstoff der folgenden Formel hergestellt, der ebenfalls Papier in violetten brillanten Farbtönen mit guter Lichtechtheit und guten Nassechtheiten färbt und auf Papier vollständig aufzieht.

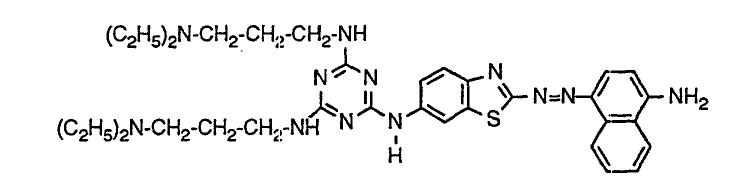

Beispiele 154 bis 160: Arbeitet man wie im Beispiel 102 beschrieben, beendet jedoch die Synthese nach Herstellung der Azobase, führt also keine Quaternierung durch, so lassen sich die folgenden Farbstoffe herstellen, die Papier in violetten Farbtönen mit guter Lichtechtheit und guten Nassechtheiten färben und auf Papier vollständig aufziehen.

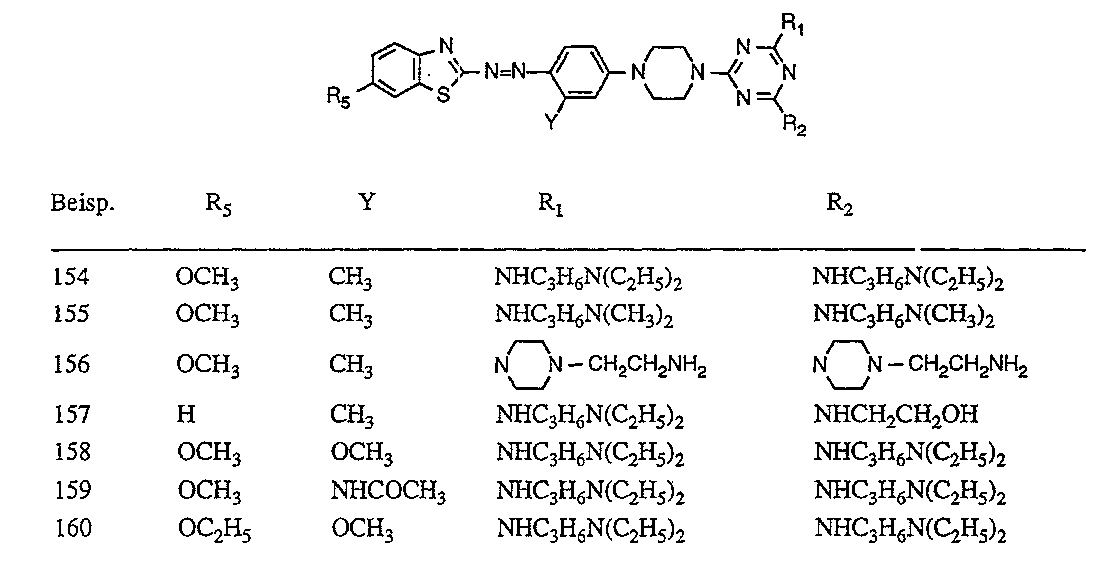

Beispiele 161 und 162: Nach der Arbeitsweise der Beispiele 154 bis 160 werden auch die folgenden Farbstoffe hergestellt, die ebenfalls Papier in violetten brillanten Farbtönen mit guter Lichtechtheit und guten Nassechtheiten färben und auf Papier vollständig aufziehen.

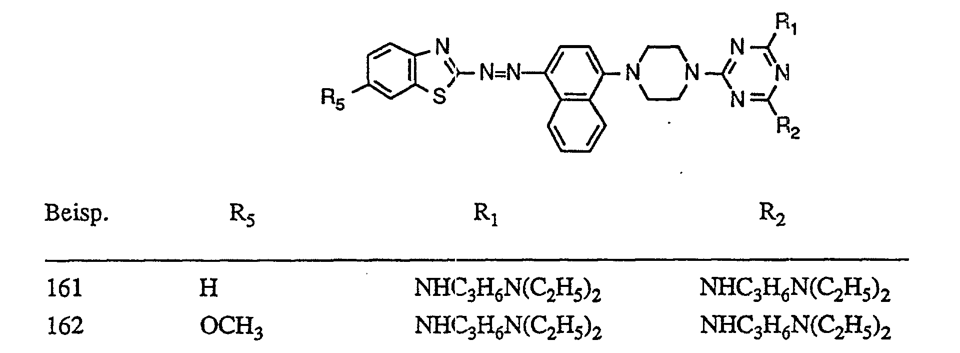

Beispiel 163: Zu 23 Teilen des auf übliche Weise hergestellten Azofarbstoffes der Formel 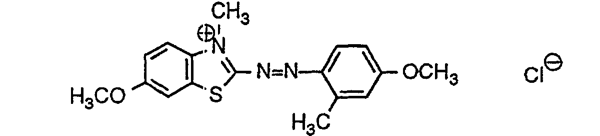 in 100 Teilen Methanol tropft man 8,5 Teile N-Phenylpiperazin und rührt die Suspension während 1 Stunde bei 25 bis 30°C. Man erhält 20 Teile des Farbstoffes der Formel

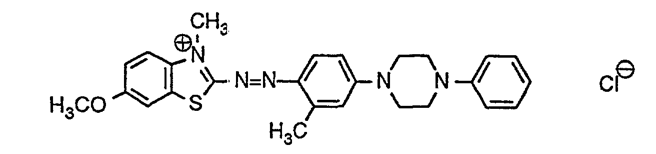

Der Farbstoff färbt Papier in brillanten Blautönen mit ausgezeichnetem Ziehvermögen und guten Echtheiten.

Beispiele 164 bis 171: Auf analoge Art wie im Beispiel 163 beschrieben werden die folgenden Farbstoffe hergestellt. Sie färben Papier in blauen Farbtönen mit guten Echtheiten.

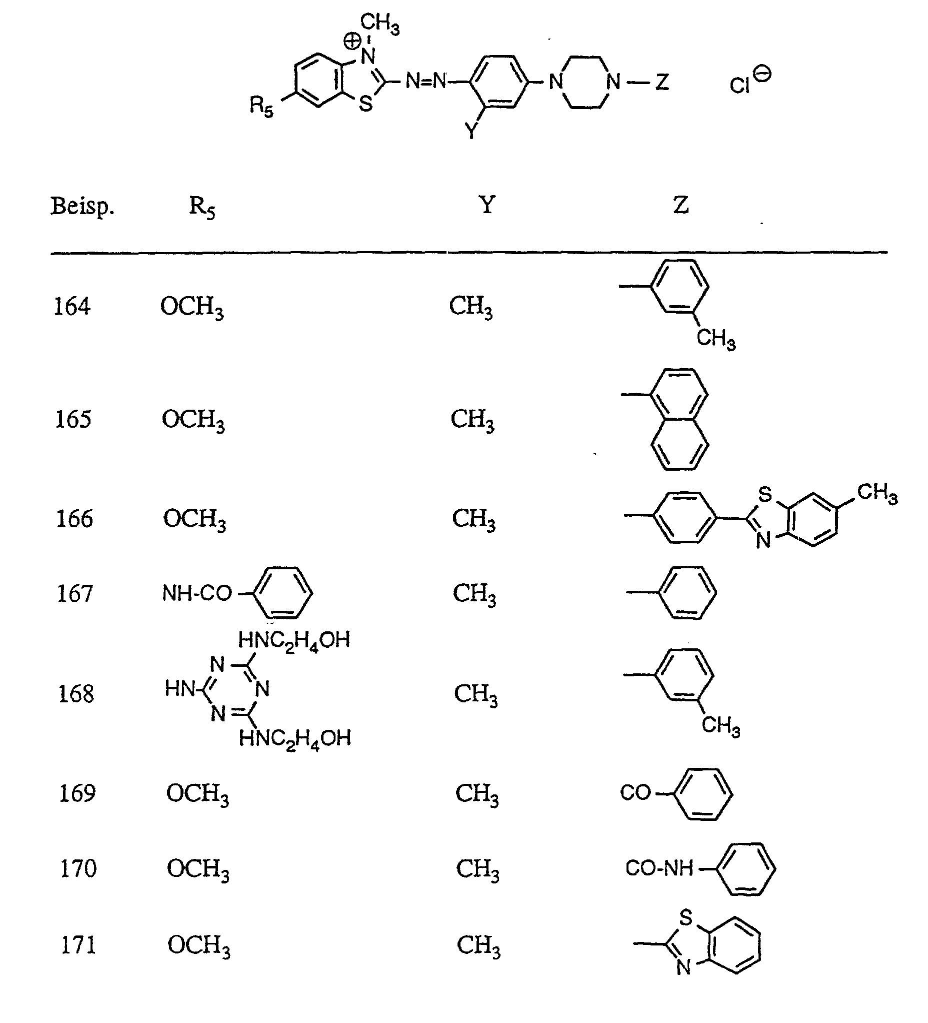

Beispiel 172: Arbeitet man wie im Beispiel 163 beschrieben, verwendet jedoch anstelle von 8,5 Teilen N-Phenylpiperazin eine äquivalente Menge p-Phenylendiamin, so erhält man den Farbstoff der Formel

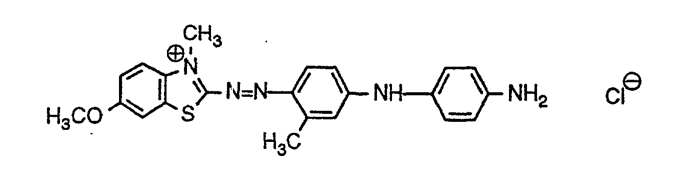

Der Farbstoff färbt Papier in grünstichigen Blautönen mit ausgezeichnetem Ziehvermögen und guten Echtheiten.

Beispiele 173 bis 175: Auf analoge Art wie im Beispiel 1 beschrieben werden die folgenden Farbstoffe hergestellt, indem man anstelle von Cyanurchlorid Tetrachlorpyrimidin verwendet. Die Farbstoffe färben Papier in blauen Farbtönen mit guten Echtheiten.

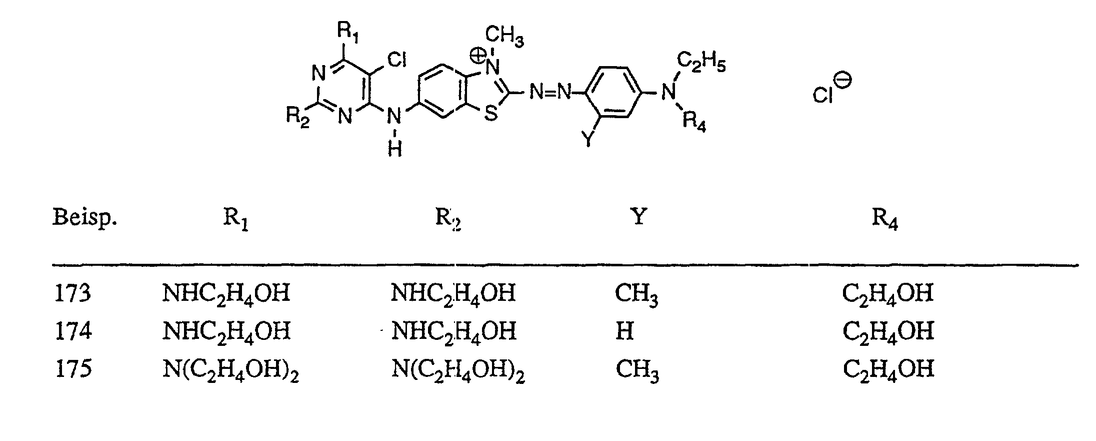

Beispiele 176 und 177: Auf analoge Art wie im Beispiel 102 beschrieben werden die folgenden Farbstoffe hergestellt, indem man anstelle von Cyanurchlorid Tetrachlorpyrimidin verwendet. Die Farbstoffe färben Papier in blauen Farbtönen mit guten Echtheiten.

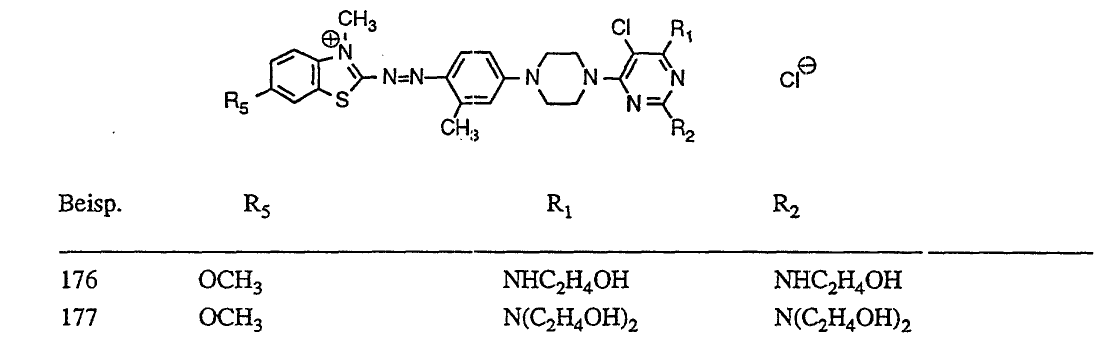

Beispiele 178 und 179: Auf analoge Art wie im Beispiel 1 beschrieben werden die folgenden Farbstoffe hergestellt, indem man anstelle von Cyanurchlorid Dichlorchinoxalincarbonylchlorid verwendet. Die Farbstoffe färben Papier in blauen Farbtönen mit guten Echtheiten.

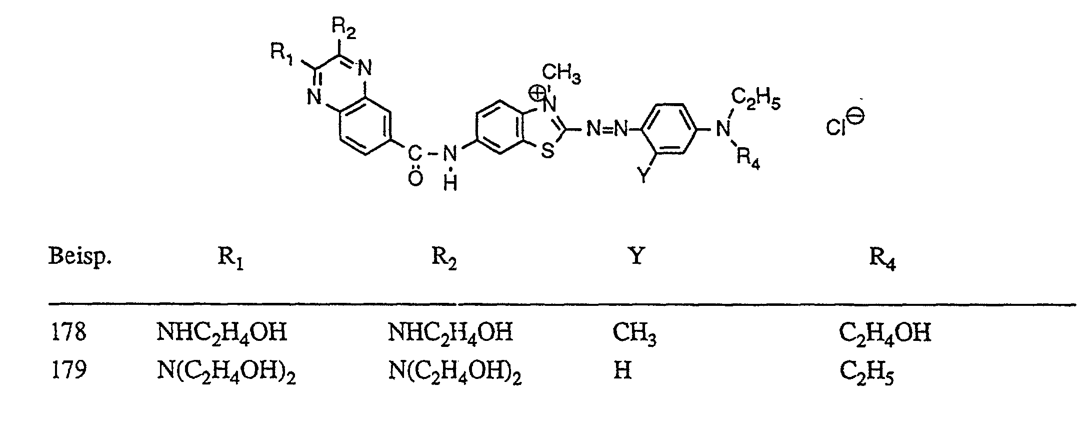

Beispiele 180 und 181: Auf analoge Art wie im Beispiel 102 beschrieben werden die folgenden Farbstoffe hergestellt, indem man anstelle von Cyanurchlorid Dichlorchinoxalincarbonylchlorid verwendet. Die Farbstoffe färben Papier in blauen Farbtönen mit guten Echtheiten.

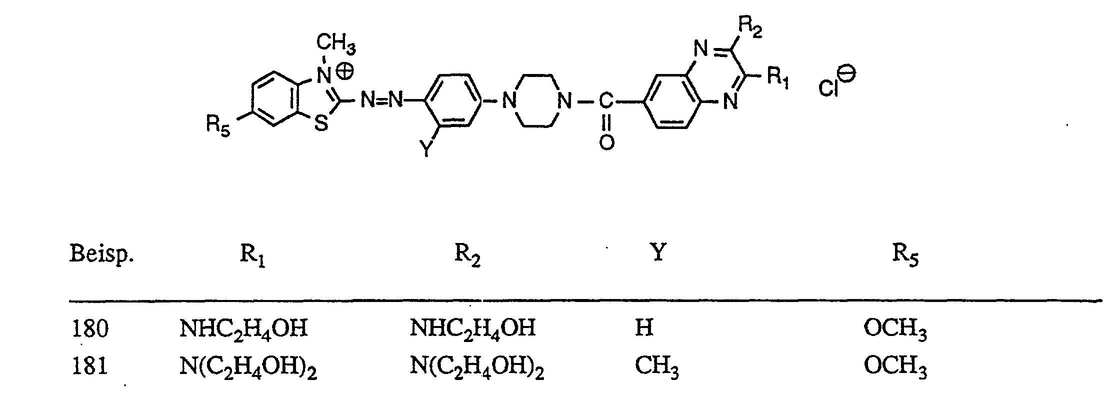

Beispiele 182 bis 184: Auf analoge Art wie in den Beispielen 1 oder 102 beschrieben werden die folgenden Farbstoffe hergestellt. Sie färben Papier in blauen Farbtönen mit guten Echtheiten.

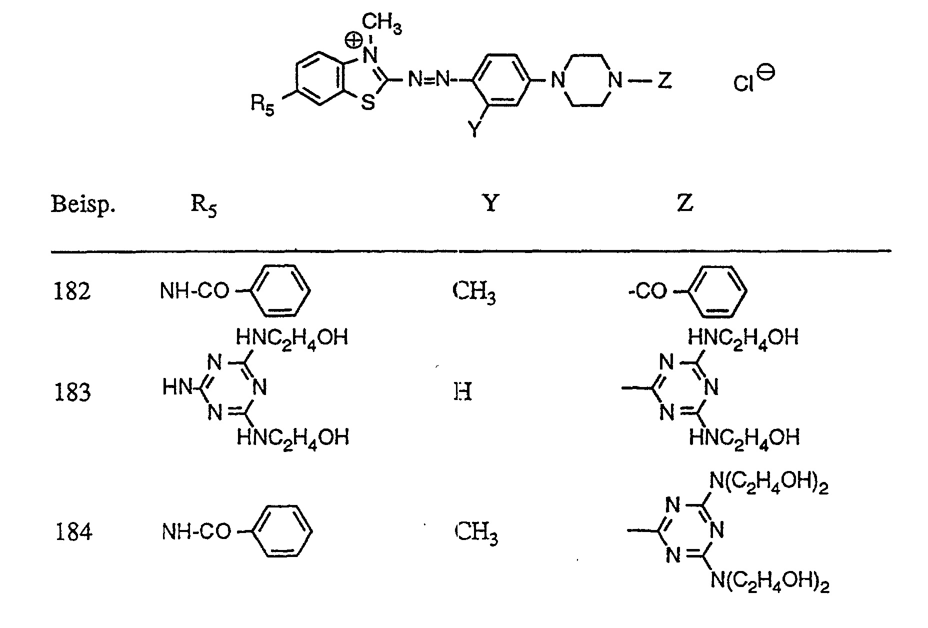

Beispiele 185 bis 188: Auf analoge Art wie im Beispiel 102 beschrieben werden die folgenden Farbstoffe hergestellt, indem man anstelle von 1-(3-Methylphenyl)piperazin eine äquivalente Menge der analogen in 3-Stellung der Phenylgruppe substituierten Phenylpiperazine verwendet. Die Farbstoffe färben Papier in blauen Farbtönen mit guten Echtheiten.

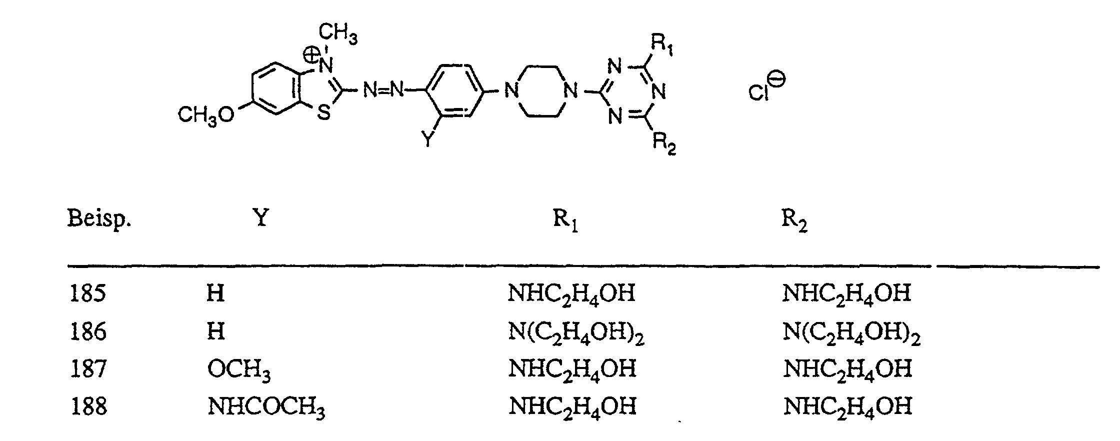

Beispiel 189: Man vermischt 50 Teile chemisch gebleichte Buche-Sulfitzellulose mit 50 Teilen gebleichter Fichtezellulose RKN 15 (Mahlgrad 22° SR) und 2 Teilen des Farbstoffes gemäss Beispiel 1 in Wasser (pH 6, Wasserhärte 10° dH, Temperatur 20°, Flottenverhältnis 1:40). Nach 15 minütigem Rühren werden Papierblätter auf einem Frank-Blattbildner hergestellt.

Das Papier ist intensiv blau gefärbt. Das Abwasser ist völlig farblos. Der Ausziehgrad erreicht praktisch 100 %. Die Nassechtheiten sind ausgezeichnet

Beispiel 190: Es wird eine Papierbahn aus gebleichter Buche-Sulfitzellulose (22° SR) auf einer kontinuierlich arbeitenden Labor-Papiermaschine hergestellt. Zehn Sekunden vor dem Stoffauflauf wird eine wässrige Lösung des Farbstoffes gemäss Beispiel 1 unter starker Turbulenz dem Dünnstoff kontinuierlich zudosiert (0,5 %ige Färbung, Flottenverhältnis 1:400, Wasserhärte 10° dH, pH 6, Temperatur 20°).

Es entsteht auf der Papierbahn eine blaue Färbung von mittlerer Intensität. Das Abwasser ist völlig farblos.

Beispiel 191: Analog zu den Angaben im Beispiel 189 werden 100 Teile Holzschliff mit 2 Teilen des Farbstoffes aus Beispiel 80 gefärbt. Man erhält eine blaue Färbung mit guten Echtheiten. Das Abwasser ist völlig farblos.

## Patentansprüche

1. Nicht-reaktive Azofarbstoffe der Formel 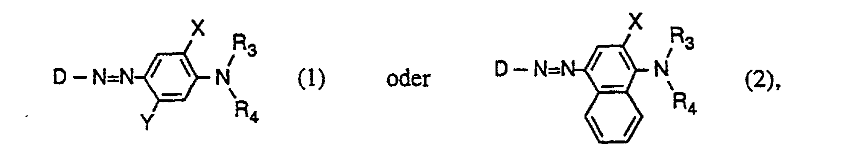 worin
D ein Rest einer Diazokomponenten der Formel 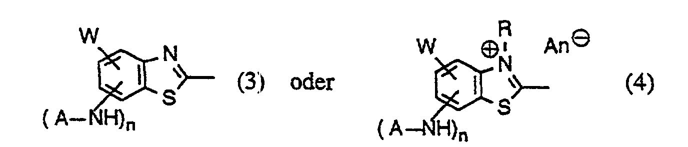 ist, wobei
A einen einen Triazin-, Pyrazin-, Pyrimidin- oder Chinoxalinrest bedeutet, der ein oder mehrere Halogenatome aufweist, welche durch Reaktion eines Halogenrestes mit einem eine OH-, SH- oder NH-Gruppe enthaltenden Rest ersetzt sein können,
W Wasserstoff, Halogen, Alkyl, Alkoxy, Carboxy, Alkanoylamino, Arylamino, Arylcarbonylamino oder Arylureido,
R gegebenenfalls substituiertes Alkyl,
An^{⊖} ein farbloses Anion und
n 0 oder 1 bedeutet,
X Wasserstoff, Alkyl oder Alkoxy,
Y Wasserstoff, Alkyl, Alkoxy, Alkanoylamino, Arylcarbonylamino oder Arylureido,
R₃ Wasserstoff oder gegebenenfalls substituiertes Alkyl,
R₄ Wasserstoff, gegebenenfalls substituiertes Alkyl, Cycloalkyl oder Aryl oder
R₃ und R₄ zusammen mit dem sie verbindenden N-Atom einen gegebenenfalls substituierten 5-, 6-, oder 7-Ring bilden, der weitere Heteroatome enthalten kann, wobei n nur dann 0 sein kann, wenn R₃ und R₄ zusammen mit dem sie verbindenden N-Atom einen Ring bildenider als Substituenten einen aromatischen carbocyclischen oder heterocyclischen Ring enthält.

2. Farbstoffe gemäss Anspruch 1, **dadurch gekennzeichnet**, dass A einen Rest der Formel 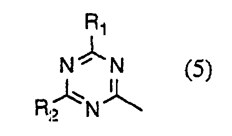 bedeutet, worin R₁ und R₂ unabhängig voneinander je Hydroxy, Alkoxy, Alkylthio, Amino, Alkylamino, Dialkylamino, Aaylamino, Piperidino oder Morpholino bedeuten.

3. Farbstoffe gemäss Anspruch 2, **dadurch gekennzeichnet**, dass R₁ und R₂ unabhängig voneinander je Amino, C₁-C₄-Alkylamino, Di-C₁-C₄-Alkylamino, Phenylamino oder Morpholino bedeuten, wobei die Alkylgruppen unsubstituiert oder substituiert sind durch Hydroxy, Carboxy, Halogen, Cyan, C₁-C₄-Alkoxy, durch C₁-C₄-Alkoxy, das durch Hydroxy substituiert ist, durch Amino, Alkylamino, Dialkylamino, Aminocarbonyl, Phenyl, Phenoxy oder Phenylaminocarbonyl, wobei die Phenylgruppe in den drei letztgenannten Resten z.B. durch C₁-C₄-Alkyl, C₁-C₄-Alkoxy oder Phenoxy substituiert sein kann, oder durch kationische Trialkylammonium- oder Pyridiniumreste.

4. Farbstoffe gemäss Anspruch 3, **dadurch gekennzeichnet**, dass R₁ und R₂ unabhängig voneinander je Methylamino, Ethylamino, Hydroxyethylamino, Dihydroxyethylamino, Hydroxypropylamino, Hydroxyisopropylamino, Methoxyethylamino, Methoxypropylamino, Hydroxyethoxyethylamino, Methoxyethoxyethylamino, Dimethylaminoethylamino, Dimethylaminopropylamino, Diethylaminoethylamino, Diethylaminopropylamino, Aminoethylamino, 2-Aminopropylamino, 4-Aminoethylpiperazino, 4-Hydroxyethylpiperazino, Phenylamino oder Morpholino bedeuten.

5. Farbstoffe gemäss Anspruch 4, **dadurch gekennzeichnet**, dass R₁ und R₂ die gleiche Bedeutung besitzen.

6. Farbstoffe gemäss Anspruch 4, **dadurch gekennzeichnet**, dass R₁ und R₂ je Hydroxyetylamino oder Dihydroxyethylamino bedeuten.

7. Farbstoffe gemäss einem der Ansprüche 1 bis 6, **dadurch gekennzeichnet**, dass W in den Diazokomponenten der Formeln (3) oder (4) Chlor, Brom, C₁-C₄-Alkyl, C₁-C₄-Alkoxy, Acetylamino, Benzoylamino oder Phenylureido bedeutet.

8. Farbstoffe gemäss einem der Ansprüche 1 bis 7, **dadurch gekennzeichnet**, dass sie der Formel (1) entsprechen, worin D einen kationischen Rest der Formel (4) bedeutet.

9. Farbstoffe gemäss einem der Ansprüche 1 bis 8, **dadurch gekennzeichnet**, dass An^{⊖} Chlorid, Hydrogensulfat, Sulfat, Methosulfat, Phosphat, Formiat, Lactat oder Acetat bedeutet.

10. Farbstoffe gemäss einem der Ansprüche 1 bis 9, **dadurch gekennzeichnet**, dass R unsubstituiertes C₁-C₄-Alkyl oder C₁-C₄-Alkyl, das durch Hydroxy, Phenyl oder Aminocarbonylethyl substituiert ist, bedeutet.

11. Farbstoffe gemäss einem der Ansprüche 1 bis 10, **dadurch gekennzeichnet**, dass X Wasserstoff, C₁-C₄-Alkyl oder C₁-C₄-Alkoxy bedeutet.

12. Farbstoffe gemäss einem der Ansprüche 1 bis 11, **dadurch gekennzeichnet**, dass Y Wasserstoff, C₁-C₄-Alkyl, C₁-C₄-Alkoxy oder C₁-C₄-Alkylcarbonylamino bedeutet.

13. Farbstoffe gemäss Anspruch 12, **dadurch gekennzeichnet**, dass Y Wasserstoff, Methyl, Methoxy oder Acetylamino bedeuten.

14. Farbstoffe gemäss einem der Ansprüche 1 bis 13, **dadurch gekennzeichnet**, dass R₃ und R₄ unabhängig voneinander je unsubstituiertes C₁-C₄-Alkyl bedeuten oder C₁-C₄-Alkyl, das durch Hydroxy, Chlor, Cyan, C₁-C₄-Alkoxy, C₁-C₄-Alkoxycarbonyl, C₁-C₄-Alkylcarbonyloxy, Carbonamido, Phenyl, Amino, Monoalkylamino, Dialkyamino oder Trialkylammonium substituiert ist, wobei in den Alkylaminogruppen die Alkylreste ebenfalls durch die genannten Substituenten substituiert sein können.

15. Farbstoffe gemäss einem der Ansprüche 1 bis 13, **dadurch gekennzeichnet**, dass R₃ und R₄ zusammen mit dem sie verbindenden N-Atom einen Pyrrolidin-, Piperidin-, Morpholin- oder Piperazinring bilden, wobei der Piperazinrest am nicht mit der Kupplungskomponente verbundenen N-Atom unsubstituiert ist oder durch Alkyl, Arylcarbonyl, Arylaminocarbonyl, Benzthiazolyl, Benzthioazolylaryl oder durch einen aromatischen carbocyclischen oder heterocyclischen Rest substituiert ist.

16. Farbstoffe gemäss Anspruch 15, **dadurch gekennzeichnet**, dass R₃ und R₄ zusammen einen Piperazinrest der Formel 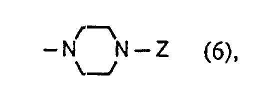 bedeuten, worin
Z einen Rest A gemäss der Definition unter den Formeln (3) und (4) im Anspruch 1 oder einen Arylrest bedeutet.

17. Farbstoffe gemäss Anspruch 16, **dadurch gekennzeichnet**, dass Z einen Rest der Formel 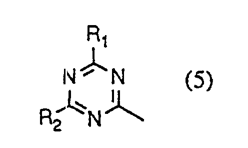 bedeutet, worin R₁ und R₂ unabhängig voneinander je Hydroxy, Alkoxy, Alkylthio, Amino, Alkylamino, Dialkylamino, Arylamino, Piperidino oder Morpholino bedeuten, oder einen Phenyl-oder Naphthylrest, der unsubstituiert oder durch C₁-C₄-Alkyl oder durch 1,3-Benzthiazolyl-2 substituiert ist, oder Phenylcarbonyl, Phenylaminocarbonyl oder 1,3-Benzthiazolyl-2.

18. Farbstoffe der Formel 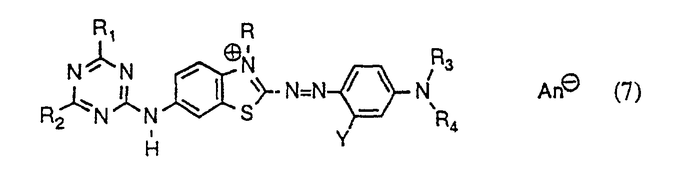 oder 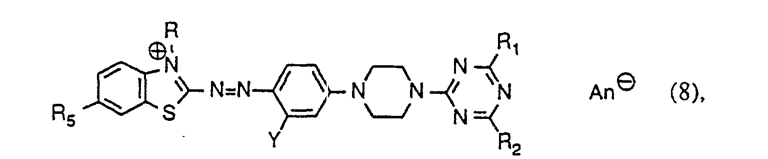 worin
R₁ und R₂ unabhängig voneinander je Hydroxy, Alkoxy, Alkylthio, Amino, Alkylamino, Dialkylamino, Arylamino, Piperidino oder Morpholino,
R unsubstituiertes C₁-C₄-Alkyl oder C₁-C₄-Alkyl, das durch Hydroxy, Phenyl oder Aminocarbonylethyl substituiert ist,
Y Wasserstoff, C₁-C₄-Alkyl, C₁-C₄-Alkoxy oder C₁-C₄-Alkylcarbonylamino,
R₃ und R₄ unabhängig voneinander je unsubstituiertes C₁-C₄-Alkyl oder C₁-C₄-Alkyl, das durch Hydroxy, Chlor, Cyan, C₁-C₄-Alkoxy, C₁-C₄-Alkoxycarbonyl, C₁-C₄-Alkylcarbonyloxy, Carbonamido, Phenyl, Amino, Monoalkylamino, Dialkyamino oder Trialkylammonium substituiert ist, wobei in den Alkylaminogruppen die Alkylreste ebenfalls durch die genannten Substituenten substituiert sein können,
R₅ Wasserstoff, C₁-C₄-Alkyl, C₁-C₄-Alkoxy, C₁-C₄-Alkylcarbonylamino, Phenylcarbonylamino oder Phenylureido und
An^{⊖} ein farbloses Anion bedeuten.

19. Verfahren zur Herstellung von Farbstoffen der Formel (1) und (2) gemäss Anspruch 1, **dadurch gekennzeichnet**, dass man ein Amin der Formel 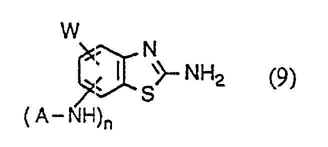 diazotiert, die erhaltene Diazoverbindung mit einer Kupplungskomponente der Formel 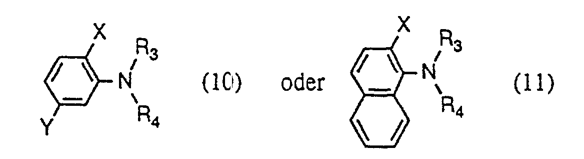 kuppelt und gegebenenfalls den erhaltenen Azofarbstoff mit einem Quaternierungsmittel R-An quaterniert, wobei X, Y, R₃, R₄, W, A, n und R die unter den Formeln (1) bis (4) im Anspruch 1 angegebenen Bedeutungen aufweisen und An einen bei der Quaternierung in das Anion An^{⊖} überführbaren Rest bedeutet.

20. Verfahren gemäss Anspruch 19 zur Herstellung von Farbstoffen der Formel 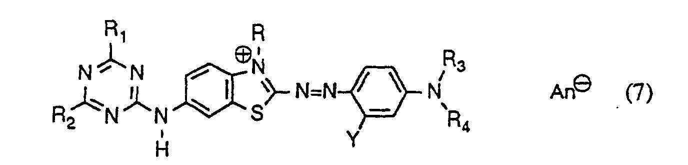 **dadurch gekennzeichnet**, dass man ein Amin der Formel 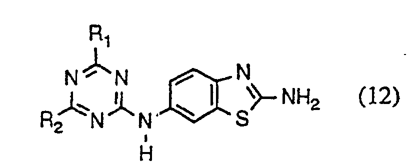 diazotiert, die erhaltene Diazoverbindung mit einer Kupplungskomponente der Formel 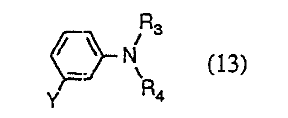 zu einer Verbindung der Formel 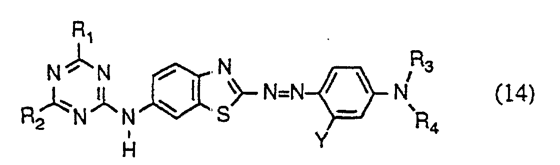 kuppelt und den erhaltenen Azofarbstoff mit einem Quaternierungsmittel R-An quaterniert, wobei X, Y, R₃, R₄, W, A, n und R die unter den Formeln (1) bis (4) im Anspruch 1 angegebenen Bedeutungen aufweisen und An einen bei der Quatemierung in das Anion An^{⊖} überführbaren Rest bedeutet.

21. Verfahren gemäss Anspruch 19 zur Herstellung von Farbstoffen der Formel 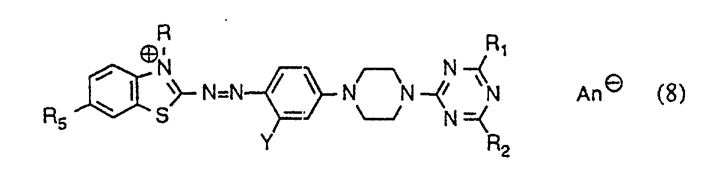 **dadurch gekennzeichnet**, dass man ein Amin der Formel 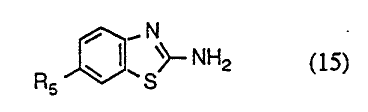 diazotiert, die erhaltene Diazoverbindung mit einer Kupplungskomponente der Formel 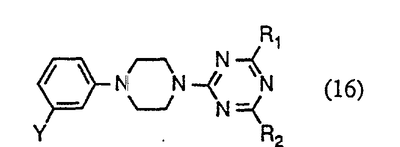 zu einer Verbindung der Formel 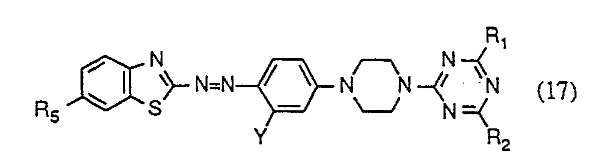 kuppelt und den erhaltenen Azofarbstoff mit einem Quaternierungsmittel R-An quaterniert, wobei R₅, Y, R₁, R₂ und R die unter den Formeln (1) bis (4) angegebenen Bedeutungen aufweisen und An einen bei der Quaternierung in das Anion An^{⊖} überführbaren Rest bedeutet.

22. Verfahren zum Färben von Papier, **dadurch gekennzeichnet**, dass man das Papier mit einem Farbstoff der Formel (1) oder (2) gemäss Anspruch 1 behandelt.

23. Das nach dem Verfahren gemäss Anspruch 22 erhaltene gefärbte Papier.

24. Feste Farbstoffzubereitungen zum Färben von Papier, **dadurch gekennzeichnet**, dass sie mindestens einen Farbstoff gemäss Anspruch 1 enthalten.

25. Flüssige Farbstoffzubereitungen zum Färben von Papier, **dadurch gekennzeichnet**, dass sie mindestens einen Farbstoff gemäss Anspruch 1 enthalten.

## Claims

1. A non-reactive azo dye of formula 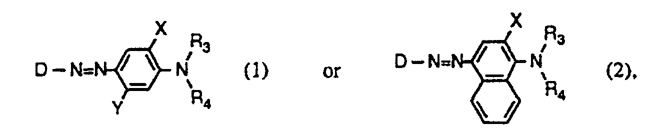 in which
D is a radical of a diazo component of formula 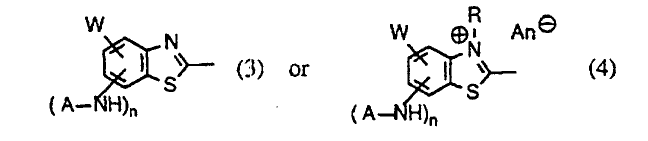 where
A is a triazine, pyrazine, pyrimidine or quinoxaline radical which carries one or more than one halogen atom which can be replaced by reaction of a halogen radical with a radical containing an OH, SH or NH group,
W is hydrogen, halogen, alkyl, alkoxy, carboxy, alkanoylamino, arylamino, arylcarbonylamino or arylureido,
R is unsubstituted or substituted alkyl,
An^{θ} is a colourless anion, and
n is 0 or 1,
X is hydrogen, alkyl or alkoxy,
Y is hydrogen, alkyl, alkoxy, alkanoylamino, arylcarbonylamino or arylureido,
R₃ is hydrogen or unsubstituted or substituted alkyl,
R₄ is hydrogen, unsubstituted or substituted alkyl, cycloalkyl or aryl, or
R₃ and R₄, together with the N atom linking them, form an unsubstituted or substituted 5-, 6- or 7-membered ring which may contain further heteroatoms, with the proviso that n may only be 0 if R₃ and R₄, together with the N atom linking them, form a ring which contains an aromatic carbocyclic or heterocyclic ring as substituent.

2. A dye according to claim 1, wherein A is a radical of formula 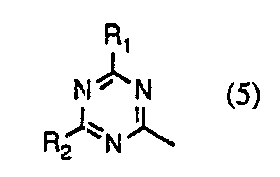 in which R₁ and R₂ are each independently of the other hydroxy, alkoxy, alkylthio, amino, alkylamino, dialkylamino, arylamino, piperidino or morpholino.

3. A dye according to claim 2, wherein R₁ and R₂ are each independently of the other amino, C₁-C₄alkylamino, di-C₁-C₄alkylamino, phenylamino or morpholino, where the alkyl groups are unsubstituted or substituted by hydroxy, carboxy, halogen, cyano, C₁-C₄alkoxy or hydroxy-substituted C₁-C₄alkoxy or by amino, alkylamino, dialkylamino, aminocarbonyl, phenyl, phenoxy or phenylaminocarbonyl, where the phenyl group in the three last-mentioned radicals may be substituted by C₁-C₄alkyl, C₁-C₄alkoxy or phenoxy; or by cationic trialkylammonium or pyridinium radicals.

4. A dye according to claim 3, wherein R₁ and R₂ are each independently of the other methylamino, ethylamino, hydroxyethylamino, dihydroxyethylamino, hydroxypropylamino, hydroxyisopropylamino, methoxyethylamino, methoxypropylamino, hydroxyethoxyethylamino, methoxyethoxyethylamino, dimethylaminoethylamino, dimethylaminopropylamino, diethylaminoethylamino, diethylaminopropylamino, aminoethylamino, 2-aminopropylamino, 4-aminoethylpiperazino, 4-hydroxyethylpiperazino, phenylamino or morpholino.

5. A dye according to claim 4, wherein R₁ and R₂ have the same meaning.

6. A dye according to claim 4, wherein R₁ and R₂ are each hydroxyethylamino or dihydroxyethylamino.

7. A dye according to any one of claims 1 to 6, wherein W in the diazo component of formula (3) or (4) is chloro, bromo, C₁-C₄alkyl, C₁-C₄alkoxy, acetylamino, benzoylamino or phenylureido.

8. A dye according to any one of claims 1 to 7, which is of formula (1), in which D is a cationic radical of formula (4).

9. A dye according to any one of claims 1 to 8, wherein An^{⊖} is chloride, hydrogensulfate, sulfate, methosulfate, phosphate, formate, lactate or acetate.

10. A dye according to any one of claims 1 to 9, wherein R is unsubstituted C₁-C₄alkyl or C₁-C₄alkyl which is substituted by hydroxy, phenyl or aminocarbonylethyl.

11. A dye according to any one of claims 1 to 10, wherein X is hydrogen, C₁-C₄alkyl or C₁-C₄alkoxy.

12. A dye according to any one of claims 1 to 11, wherein Y is hydrogen, C₁-C₄alkyl, C₁-C₄alkoxy or C₁-C₄alkylcarbonylamino.

13. A dye according to claim 12, wherein Y is hydrogen, methyl, methoxy or acetylamino.

14. A dye according to any one of claims 1 to 13, wherein R₃ and R₄ are each independently of the other unsubstituted C₁-C₄alkyl, or C₁-C₄alkyl which is substituted by hydroxy, chloro, cyano, C₁-C₄alkoxy, C₁-C₄alkoxycarbonyl, C₁-C₄alkylcarbonyloxy, carbox amido, phenyl, amino, monoalkylamino, dialkylamino or trialkylammonium, where the alkyl radicals in the alkylamino groups may likewise be substituted by the stated substituents.

15. A dye according to any one of claims 1 to 13, wherein R₃ and R₄, together with the N atom linking them, form a pyrrolidine, piperidine, morpholine or piperazine ring, where the piperazine radical is unsubstituted at the N atom which is not linked to the coupling component, or is substituted by alkyl, arylcarbonyl, arylaminocarbonyl, benzothiazolyl, benzothioazolylaryl, or by an aromatic carbocyclic or heterocyclic radical.

16. A dye according to claim 15, wherein R₃ and R₄ together are a piperazine radical of formula 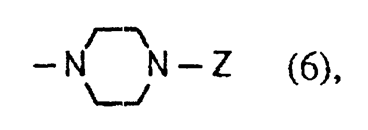 in which
Z is a radical A as defined for formulae (3) and (4) in claim 1, or is an aryl radical.

17. A dye according to claim 16, wherein Z is a radical of formula 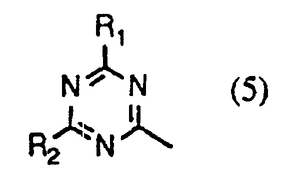 in which R₁ and R₂ are each independently of the other hydroxy, alkoxy, alkylthio, amino, alkylamino, dialkylamino, arylamino, piperidino or morpholino, or a phenyl or naphthyl radical which is unsubstituted or substituted by C₁-C₄alkyl or by 1,3-benzothiazol-2-yl, or phenylcarbonyl, phenylaminocarbonyl or 1,3-benzothiazol-2-yl.

18. A dye of formula 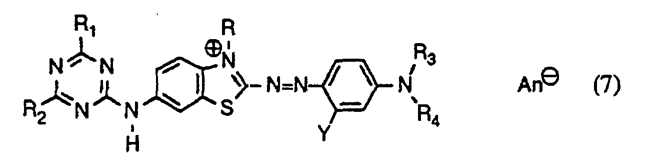 or 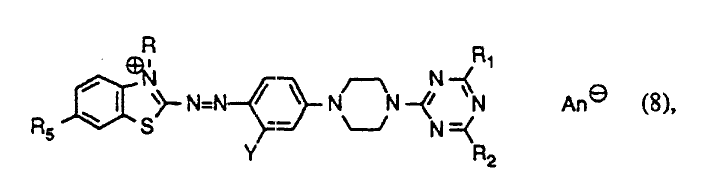 in which
R₁ and R₂ are each independently of the other hydroxy, alkoxy, alkylthio, amino, alkylamino, dialkylamino, arylamino, piperidino or morpholino,
R is unsubstituted C₁-C₄alkyl or C₁-C₄alkyl which is substituted by hydroxy phenyl or aminocarbonylethyl,
Y is hydrogen, C₁-C₄alkyl, C₁-C₄alkoxy or C₁-C₄alkylcarbonylamino, R₃ and R₄ are each independently of the other unsubstituted C₁-C₄alkyl or C₁-C₄alkyl which is substituted by hydroxy, chloro, cyano, C₁-C₄alkoxy, C₁-C₄alkoxycarbonyl, C₁-C₄alkylcarbonyloxy, carboxamido, phenyl, amino, monoalkylamino, dialkylamino or trialkylammonium, where the alkyl radicals in the alkylamino groups may likewise be substituted by the stated substituents,
R₅ is hydrogen, C₁-C₄alkyl, C₁-C₄alkoxy, C₁-C₄alkylcarbonylamino, phenyl carbonylamino or phenylureido and
An^{⊖} is a colourless anion.

19. A process for the preparation of a dye of formula (1) or (2) according to claim 1, which comprises diazotising an amine of formula 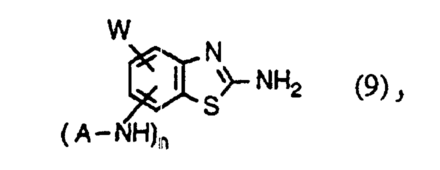 coupling the resultant diazo compound to a coupling component of formula 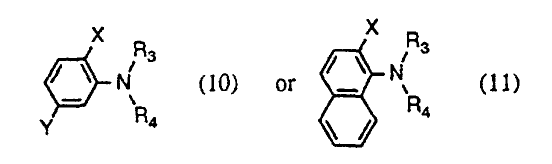 and, if desired, quaternising the resultant azo dye with a quaternising agent R-An, where X, Y, R₃, R₄, W, A, n and R are as defined for formulae (1) to (4) in claim 1, and An is a radical which can be converted in the quaternisation into the anion An^{⊖}.

20. A process according to claim 19 for the preparation of a dye of formula 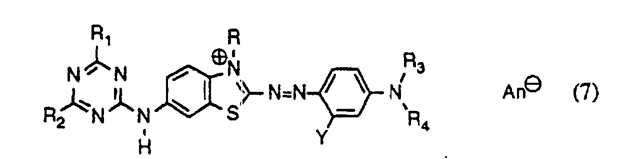 which comprises diazotising an amine of formula 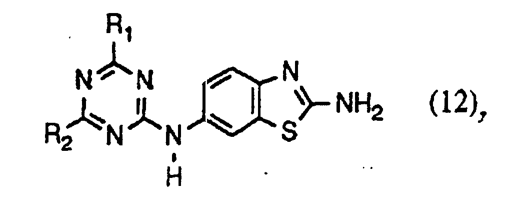 coupling the resultant diazo compound to a coupling component of formula 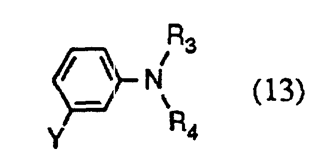 to give a compound of formula 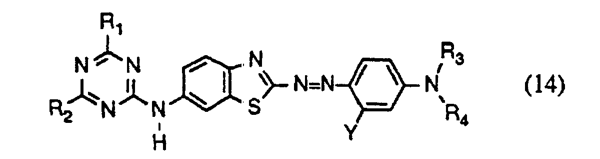 and quaternising the resultant azo dye with a quaternising agent R-An where X, Y, R₃, R₄, W, A, n and R are as defined for formulae (1) to (4) in claim 1, and An is a radical which can be converted in the quaternisation into the anion An^{⊖}.

21. A process according to claim 19 for the preparation of a dye of formula 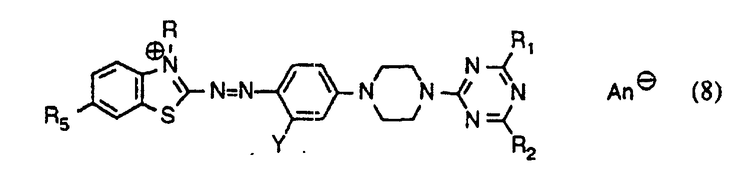 which comprises diazotising an amine of formula 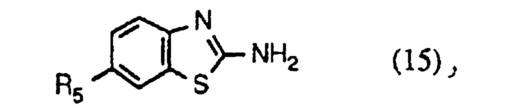 coupling the resultant diazo compound to a coupling component of formula 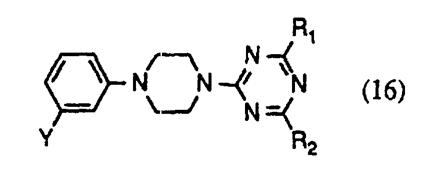 to give a compound of formula 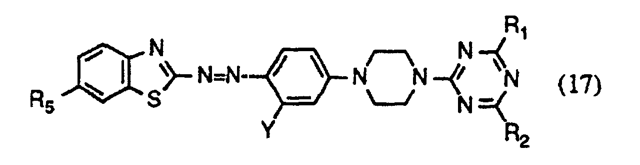 and quaternising the resultant azo dye with a quaternising agent R-An, where R₅, Y, R₁, R₂ and R are as defined for formulae (1) to (4), and An is a radical which can be converted in the quaternisation into the anion An^{⊖}.

22. A process for dyeing paper, which comprises treating the paper with a dye of formula (1) or (2) according to claim 1.

23. The dyed paper obtained by the process according to claim 22.

24. A solid dye formulation for dyeing paper, which comprises at least one dye according to claim 1.

25. A liquid dye formulation for dyeing paper, which comprises at least one dye according to claim 1.

## Revendications

1. Colorants azoïques non réactifs de formule 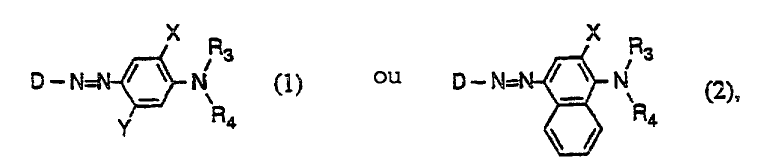 où
D représente un reste d'un composant diazoïque de formule 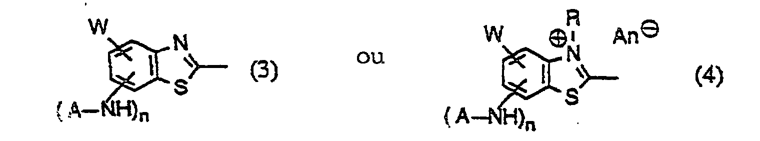 où
A représente un reste triazine, pyrazine, pyrimidine ou quinoxaline, qui présente un ou plusieurs atomes d'halogène, qui peuvent être remplacés par réaction d'un reste halogène avec un reste contenant un groupe OH, SH ou NH,
W représente un atome d'hydrogène, un atome d'halogène, des groupes alkyle, alkoxy, carboxy, alcanoylamino, arylamino, arylcarbonylamino ou aryluréido,
R représente un groupe alkyle éventuellement substitué,
An^{⊖} représente un anion incolore et
n vaut 0 ou 1,
X représente un atome d'hydrogène, des groupes alkyle ou alkoxy,
Y représente un atome d'hydrogène, des groupes alkyle, alkoxy, alcanoylamino, arylcarbonylamino ou aryluréido,
R₃ représente un atome d'hydrogène ou un groupe alkyle éventuellement substitué,
R₄ représente un atome d'hydrogène, un groupe aryle, cycloalkyle ou alkyle éventuellement substitué, ou
R₃ et R₄ forment conjointement avec l'atome de N les reliant un cycle à 5, 6 ou 7 chaînons éventuellement substitué, qui peut contenir d'autres hétéroatomes, n ne pouvant valoir 0 que dans le cas où R₃ et R₄ forment conjointement avec l'atome de N les reliant un cycle lequel contient, en tant que substituant, un cycle aromatique carbocylique ou hétérocyclique.

2. Colorants selon la revendication 1, **caractérisés en que** A représente un reste de formule 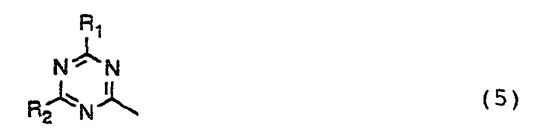 où R₁ et R₂ représentent chacun, indépendamment l'un de l'autre, des groupes hydroxy, alkoxy, alkylthio, amino, alkylamino, dialkylamino, arylamino, pipéridino ou morpholino.

3. Colorants selon la revendication 2, **caractérisés en ce que** R₁ et R₂ représentent chacun, indépendamment l'un de l'autre, des groupes amino, (alkyl en C₁-C₄)amino, di-(alkyl en C₁-C₄)amino, phénylamino ou morpholino, les groupes alkyle étant non substitués ou substitués par des substituants hydroxy, carboxy, halogène, cyano, alkoxy en C₁-C₄, par alkoxy en C₁-C₄ substitué par un substituant hydroxy, lesdits groupes alkyle sont substitués encore par des substituants amino, alkylamino, dialkylamino, aminocarbonyle, phényle, phénoxy ou phénylaminocarbonyle, le groupe phényle dans les trois derniers restes cités pouvant être substitué, par exemple, par des substituants alkyle en C₁-C₄, alkoxy en C₁-C₄ ou phénoxy, ou par des restes cationiques trialkylammonium ou pyridinium.

4. Colorants selon la revendication 3,
**caractérisés en ce que** R₁ et R₂ représentent chacun, indépendamment l'un de l'autre, des groupes méthylamino, éthylamino, hydroxyéthylamino, dihydroxyéthylamino, hydroxypropylamino, hydroxyisopropylamino, méthoxyéthylamino, méthoxypropylamino, hydroxyéthoxyéthylamino, méthoxyéthoxyéthylamino, diméthylaminoéthylamino, diméthylaminopropylamino, diéthylaminoéthylamino, diéthylaminopropylamino, aminoéthylamino, 2-aminopropylamino, 4-aminoéthylpipérazino, 4-hydroxyéthylpipérazino, phénylamino ou morpholino.

5. Colorants selon la revendication 4, **caractérisés en ce que** R₁ et R₂ possèdent la même signification.

6. Colorants selon la revendication 4, **caractérisés en ce que** R₁ et R₂ représentent chacun des groupes hydroxyéthylamino ou dihydroxyéthylamino.

7. Colorants selon l'une des revendications 1 à 6, **caractérisés en ce que** W dans le composant diazo des formules (3) ou (4) représente des groupes chloro, bromo, alkyle en C₁-C₄, alkoxy en C₁-C₄, acétylamino, benzoylamino ou phényluréido.

8. Colorants selon l'une des revendications 1 à 7, **caractérisés en ce qu**'ils répondent à la formule (1), où D représente un reste cationique de formule (4).

9. Colorants selon l'une des revendications 1 à 8, **caractérisés en ce que** An^{Θ} représente chlorure, bisulfate, sulfate, méthosulfate, phosphate, formiate, lactate ou acétate.

10. Colorants selon l'une des revendications 1 à 9, **caractérisés en ce que** R représente des groupes alkyle en C₁-C₄ non substitué ou alkyle en C₁-C₄ substitué par des substituants hydroxy, phényle ou aminocarbonyléthyle.

11. Colorants selon l'une des revendications 1 à 10, **caractérisés en ce que** X représente un atome d'hydrogène, des groupes alkyle en C₁-C₄ ou alkoxy en C₁-C₄.

12. Colorants selon l'une des revendications 1 à 11, **caractérisés en ce que** Y représente un atome d'hydrogène, des groupes alkyle en C₁-C₄, alkoxy en C₁-C₄ ou (alkyl en C₁-C₄)carbonylamino.

13. Colorants selon l'une des revendications 1 à 12, **caractérisés en ce que** Y représente un atome d'hydrogène, des groupes méthyle, méthoxy ou acétylamino.

14. Colorants selon l'une des revendications 1 à 13, **caractérisés en ce que** R₃ et R₄ représentent chacun, indépendamment l'un de l'autre, des groupes alkyle en C₁-C₄ non substitué ou alkyle en C₁-C₄ substitué par des substituants hydroxy, chloro, cyano, alkoxy en C₁-C₄, (alkoxy en C₁-C₄)carbonyle, (alkyl en C₁-C₄)-carbonyloxy, carboxamido, phényle, amino, monoalkylamino, dialkylamino ou trialkylammonium, les restes alkyle dans les groupes alkylamino pouvant être substitués également par les substituants précités.

15. Colorants selon l'une des revendications 1 à 13, **caractérisés en ce que** R₃ et R₄ forment ensemble avec l'atome de N les reliant un cycle pyrrolidine, pipéridine, morpholine ou pipérazine, le reste pipérazine n'étant pas substitué sur l'atome de N lié au composant de copulation ou est substitué par des substituants alkyle, arylcarbonyle, arylaminocarbonyle, benzothiazolyle, benzothiazolylaryle ou par un reste aromatique, carbocyclique ou hétérocyclique.

16. Colorants selon la revendication 15, **caractérisés en ce que** R₃ et R₄ forment ensemble un reste pipérazine de formule 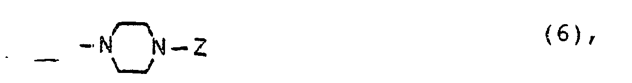 où
Z représente un reste A selon la définition donnée aux formules (3) et (4) à la revendication 1 ou représente un reste aryle.

17. Colorants selon la revendication 16, **caractérisés en ce que** Z représente un reste de formule 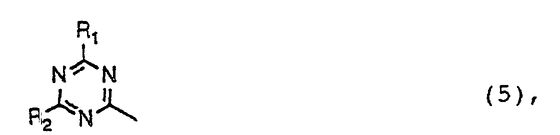 où R₁ et R₂ représentent chacun, indépendamment l'un de l'autre, des groupes hydroxy, alkoxy, alkylthio, amino, alkylamino, dialkylamino, arylamino, pipéridino ou morpholino, ou représente un reste phényle ou naphtyle, qui est non substitué ou substitué par des substituants alkyle en C₁-C₄ ou par 1,3-benzothiazolyle-2, ou représente phénylcarbonyle, phénylaminocarbonyle ou 1,3-benzothiazolyle-2.

18. Colorants de formule 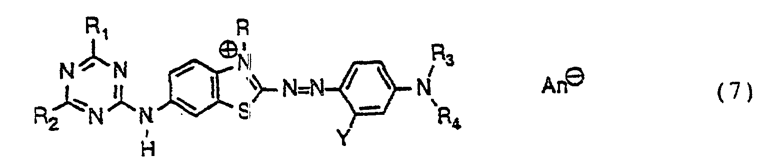 ou 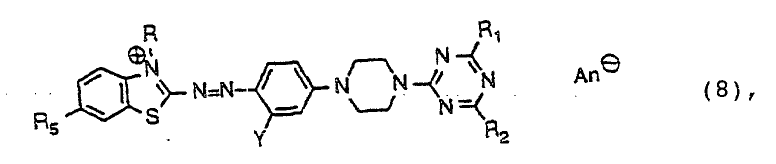 où
R₁ et R₂ représentent chacun, indépendamment l'un de l'autre, des groupes hydroxy, alkoxy, alkylthio, amino, alkylamino, dialkylamino, arylamino, pipéridino ou morpholino,
R représente un groupe alkyle en C₁-C₄ non substitué ou alkyle en C₁-C₄ substitué par des substituants hydroxy, phényle ou aminocarbonyléthyle,
Y représente un atome d'hydrogène, des groupes alkyle en C₁-C₄, alkoxy en C₁-C₄ ou (alkyl en C₁-C₄)-carbonylamino,
R₃ et R₄ représentent chacun, indépendamment l'un de l'autre, des groupes alkyle en C₁-C₄ non substitué ou alkyle en C₁-C₄ substitué par des substituants hydroxy, chloro, cyano, alkoxy en C₁-C₄, (alkoxy en C₁-C₄)carbonyle, (alkoxy en C₁-C₄)carbonyloxy, carboxamido, phényle, amino, monoalkylamino, dialkylamino ou trialkylammonium, où les restes alkyle dans les groupes alkylamino peuvent également être substitués par des substituants précités,
R₅ représente un atome d'hydrogène, des groupes alkyle en C₁-C₄, alkoxy en C₁-C₄, (alkyl en C₁-C₄)-carbonylamino, phénylcarbonylamino ou phényluréido et
An^{⊖} représente un anion incolore.

19. Procédé pour la préparation de colorants de formule (1) et (2) selon la revendication 1, **caractérisé en ce qu**'on diazote une amine de formule 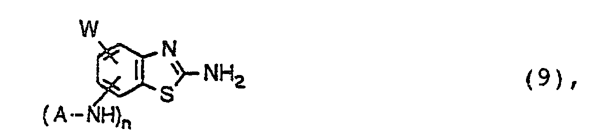 on copule le composé diazoïque obtenu avec un composant de copulation de formule 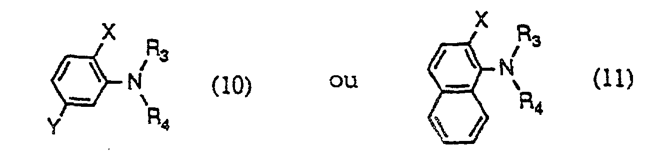 et éventuellement on quaternise le colorant azoïque obtenu à l'aide d'un agent de quaternisation R-An, où X, Y, R₃, R₄, W, A, n et R possédant les significations indiquées aux formules (1) à (4) données à la revendication 1 et An représente un reste transformable en l'anion An^{⊖} au cours de la quaternisation.

20. Procédé selon la revendication 19 pour la préparation de colorants de formule 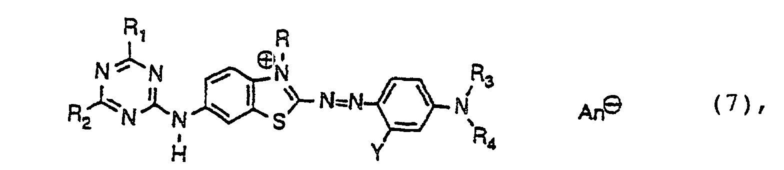 **caractérisé en ce qu**'on diazote une amine de formule 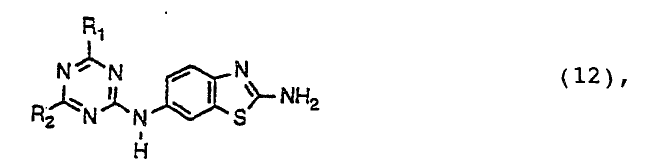 on copule le composé diazoïque obtenu avec un composant de copulation de formule 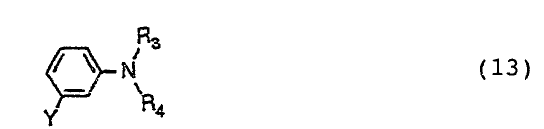 pour obtenir un composé de formule 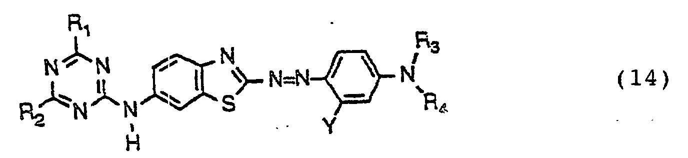 et on quaternise le colorant azoïque obtenu à l'aide d'un agent de quaternisation R-An, où X, Y, R₃, R₄, W, A, n et R possèdent les significations données aux formules (1) à (4) à la revendication 1 et An représente un reste transformable en l'anion An^{⊖} au cours de la quaternisation.

21. Procédé selon la revendication 19 pour la préparation de colorants de formule 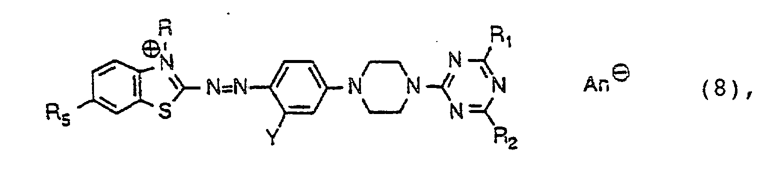 **caractérisé en ce qu**'on diazote une amine de formule 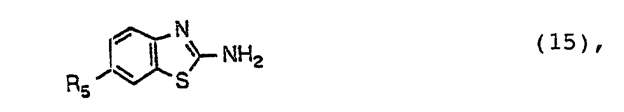 on copule le composé diazoïque obtenu avec un composant de copulation de formule 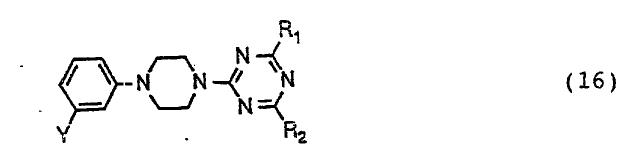 pour obtenir un composé de formule 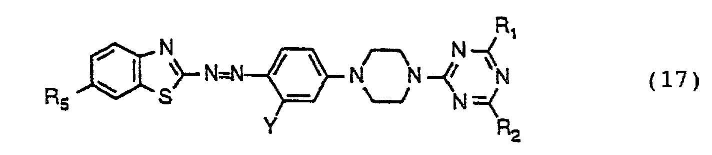 et on quaternise le colorant azoïque obtenu à l'aide d'un agent de quaternisation R-An, où R₅, Y, R₁, R₂ et R possèdent les significations données aux formules (1) à (4) et An représente un reste transformable en l'anion An^{Θ} au cours de la quaternisation.

22. Procédé pour la coloration de papier, **caractérisé en ce qu**'on traite le papier par un colorant de formule (1) ou (2) selon la revendication 1.

23. Papier coloré obtenu selon le procédé selon la revendication 22.

24. Préparations de colorants solides pour la coloration de papier **caractérisées en ce qu**'elles contiennent au moins un colorant selon la revendication 1.

25. Préparations de colorants liquides pour la coloration de papier, **caractérisées en ce qu**'elles contiennent au moins un colorant selon la revendication 1.
